(19) Europäisches Patentamt
European Patent Office
Office européen des brevets

(11) **EP 3 124 508 A1**

(12) **EUROPÄISCHE PATENTANMELDUNG**

(43) Veröffentlichungstag:
01.02.2017 Patentblatt 2017/05

(51) Int Cl.:
*C08F 212/36* (2006.01)   *B60C 1/00* (2006.01)
*C08F 216/12* (2006.01)   *C08F 218/18* (2006.01)
*C08F 222/10* (2006.01)   *C09J 4/00* (2006.01)

(21) Anmeldenummer: 15178531.8

(22) Anmeldetag: **27.07.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **ARLANXEO Deutschland GmbH**
**41540 Dormagen (DE)**

(72) Erfinder:
• **KOHL, Christopher**
**55127 Mainz (DE)**

• **ZHOU, Jiawen**
**47443 Moers (DE)**
• **SCHMIDT, Udo**
**50735 Köln (DE)**
• **FRÜH, Thomas**
**42115 Wuppertal (DE)**
• **LUCASSEN, Alex**
**41538 Dormagen (DE)**

(74) Vertreter: **Wichmann, Birgid et al**
**LANXESS Deutschland GmbH**
**LEX-IPR**
**Kennedyplatz 1**
**50569 Köln (DE)**

(54) **VERSIEGELUNGSGELE, VERFAHREN ZU DEREN HERSTELLUNG SOWIE IHRER VERWENDUNG IN VERSIEGELUNGSMASSEN FÜR SELBSTVERSIEGELNDE REIFEN**

(57) Die vorliegende Erfindung betrifft
• ein **Versiegelungsgel** mit einer Mooney-Viskosität (ML1+4@100 °C) im Bereich von 100 MU bis 170 MU,
• eine Versiegelungsmasse enthaltend erfindungsgemäßes **Versiegelungsgel**,
• ein Verfahren zur Herstellung dieser Versiegelungsmasse,

• die Verwendung von **Versiegelungsgelen** zur Verbesserung der viskoelastischen Eigenschaften in Versiegelungsmassen, sowie
• die Verwendung von versiegelungsgelhaltigen Versiegelungsmassen zur Verbesserung der Rollwiderstandseigenschaften in Reifen mit Versiegelungsschichten.

**EP 3 124 508 A1**

**Beschreibung**

Die vorliegende Erfindung betrifft

- ein **Versiegelungsgel** mit einer Mooney-Viskosität (ML1+4) @ 100 °C im Bereich von 100 MU bis 170 MU,

- eine **Versiegelungsmasse** enthaltend erfindungsgemäßes Versiegelungsgel,

- ein Verfahren zur **Herstellung dieser Versiegelungsmasse,**

- die **Verwendung** von **Versiegelungsgelen** in Versiegelungsmassen sowie

- die **Verwendung** von versiegelungsgelhaltigen **Versiegelungsmassen** in Reifen.

Im Betrieb eines Luftreifens für Pkw und Lkw besteht die Gefahr, dass der Reifen durch das Eindringen von Fremdkörpern beschädigt wird und der Reifen aufgrund der Beschädigung Luft verliert. Der Verlust an Reifenluft führt oftmals zu einem instabilen Fahrzustand, der den sofortigen Wechsel oder die behelfsmäßige Reparatur des Reifens erfordert. Um nicht in gefährlichen Verkehrssituationen das Fahrzeug für einen Reifenwechsel oder -reparatur stoppen und verlassen zu müssen, wurden verschiedene Reifen- und Radkonzepte entwickelt. So existieren am Markt Reifen mit Notlaufeigenschaften, die eine vorübergehende Weiterfahrt ermöglichen, indem sich bei Reifendruckverlust die Lauffläche auf einen darunterliegenden Stützring absenkt. Des Weiteren gibt es Notlaufreifen, die sich durch eine verstärkte Reifenseitenwand auszeichnen, die bei Reifendruckverlust die Achslast auch ohne Luftdruck für eine beschränkte Zeit tragen kann, ohne in eine unsichere Fahrsituation zu gelangen. All diese am Markt befindlichen Konzepte erhöhen das Reifengewicht und den Rollwiderstand signifikant und damit den Treibstoffverbrauch im Fahrzeugbetrieb.

**Reifen mit einer Versiegelungsmasse in Form einer Selbstversiegelungsschicht,** die eindringende Fremdkörper umschließt und/oder die durch sie entstandenen Löcher unmittelbar schließt, sind prinzipiell bekannt.

Bereits 1968 offenbarte die US-A-3,565,151 einen selbstversiegelnden Reifen enthaltend zwei Lagen an Versiegelungsmassen, welche durch den Innerliner getrennt und von Schulter zu Schulter im Inneren der Reifenkarkasse aufgetragen sind. Das Versiegelungsmaterial besteht hauptsächlich aus Styrol-Butadien-Kautschuk (SBR) sowie einer kleinen Menge an Vernetzern, wobei es sich bei der SBR-Komponente um eine Mischung aus 80 phr bis 95 phr (parts per hundred rubber) kaltpolymerisiertem SBR und 5 phr bis 20 phr warmpolymerisiertem SBR handelt. Das Dokument liefert keinerlei Hinweis auf Adhäsions- und Kohäsionseigenschaften.

Selbstversiegelnde Reifen sind außerdem in der US-A-3,981,342 offenbart. Das Patent beschreibt einen Selbstversiegelungsreifen mit einer Schicht beinhaltend eine Mischung aus einem niedermolekularen flüssigen Elastomer und einem hochmolekularen festen Elastomer, sowie einer Menge an Vernetzungsmittel, die ausreicht, um eine teilweise Vernetzung der Mischung zu erzeugen, wobei das flüssige Elastomer in einer größeren Menge als das feste Elastomer vorliegt.

Die US-A-4,228,839 offenbart einen selbstversiegelnden Reifen mit einer Schicht beinhaltend eine Mischung aus einem durch energiereiche Strahlung abbaubaren polymeren Material und einem polymeren Material, welches durch Strahlung und/oder durch Hitze vernetzt werden kann.

Die US-A-4,664,168 offenbart einen selbstversiegelnden Reifen, welcher an der Innenseite eine Selbstversiegelungsschicht aufweist und eine Mehrzahl an Stützelementen, welche teilweise mit der Versiegelungsschicht überlappen, um die Versiegelungsmasse während der Herstellung und der Verwendung an ihrem Platz zu halten.

Die US-B-7,004,217 offenbart einen selbstversiegelnden Reifen enthaltend eine Versiegelungskammer mit einer Versiegelungsmasse zwischen der Karkasse und dem Innerliner.

Die US-A-4,113,799 offenbart eine Versiegelungsschicht enthaltend einen hochmolekularen Butylkautschuk und einen niedermolekularen Butylkautschuk in einem Verhältnis von 20:80 bis 60:40, unter Beigabe von Klebrigmachern in einer Menge von 55 Gew.-% bis 70 Gew.-%.

Die DE-A-10-2009-003333 offenbart Versiegelungsmassen aus viskoelastischem Gel für selbstabdichtende Fahrzeugluftreifen enthaltend einen Füllstoff aus Polymeren wie unvulkanisiertem oder vulkanisiertem Kautschuk in Form von Partikeln mit einem mittleren Durchmesser von 0,05 mm bis 8 mm. Die Partikel sollen die Dichtwirkung im Vergleich zu bekannten Dichtmitteln aus Gel weiter verbessern. Die Auswirkungen auf die Adhäsions- und Kohäsionseigenschaften sind nicht offenbart.

Die WO-A-2008/019901 offenbart unter anderem Versiegelungsmassen auf Basis von partiell vernetztem Butylkautschuk. Grundsätzlich kommen solche auf Kautschuken basierende Dichtmittel in Frage, die auf einer Kombination von niedermolekularen flüssigen mit hochmolekularen festen Kautschuktypen basieren, wie beispielsweise in US-A-5,295,525 beschrieben.

Die in US-B-6,508,898 aufgeführten Gelsysteme sind auf Polyurethan- und Siliconbasis. Allerdings sind Vulkanisate aus Siliconkautschuk unbeständig gegen beispielsweise naphthenische und aromatische Öle. Die geringe Haftung zu anderen Substraten (niedrige Oberflächenenergie) sowie hohe Wasserdampf- und Gasdurchlässigkeit sind ebenfalls für eine Reifenanwendung von Nachteil. Es ist beschrieben, dass Siliconkautschuk eine 100-mal höhere Gasdurchlässigkeit hat als BR bzw. Naturkautschuk (Kautschuk Technologie, F. Röthemeyer, F. Sommer, Carl Hanser Verlag München Wien, 2006; Seite 206). Nachteile für den Einsatz von Polyurethankautschuken sind ihre mangelnde Verträglichkeit mit Weichmachern. Phthalsäure- und Adipinsäureester sind bis zu 30 phr verträglich. Polyester-Typen benötigen Hydrolyseschutzmittel, Polyethertypen benötigen UV-Stabilisatoren. Polyurethan-Elastomere, die im oberen Bereich der Härteskala zu finden sind, besitzen außerdem auf Grund der Hydrolyseanfälligkeit eine ungünstige Wärmebeständigkeit (Kautschuk Technologie, F. Röthemeyer, F. Sommer, Carl Hanser Verlag München Wien, 2006; Seite 218). Aus den oben genannten Gründen ist daher ein Einsatz von Dichtmassen für Reifenanwendungen auf Silicon- und Polyurethankautschukbasis nachteilig.

Die WO-A-2009/143895 offenbart Versiegelungsmassen enthaltend vorvernetzte SBR-Partikel als Nebenkomponente und Natur- oder Synthesekautschuk als Hauptkomponente. Diese vernetzten SBR-Partikel werden durch **warme Emulsionspolymerisation** hergestellt. Verschiedene Studien zeigten, dass die Reduktion der Polymerisationstemperatur von 50 °C bei warmer Emulsionspolymerisation auf 5 °C bei kalter Emulsionspolymerisation einen starken Einfluss auf die Molekulargewichtsverteilung hatte. Die Entstehung von niedermolekularen Fraktionen bei der schnellen Reaktion der Thiole in der Anfangsphase der radikalischen Polymerisation bei 5 °C wurde deutlich vermindert, sodass eine bessere Kontrolle der Kettenlänge der Polymere ermöglicht wurde. Es wurde gezeigt, dass neben der verbesserten Kettenlängenverteilung auch die ungewollte und unkontrollierte Vernetzungsreaktion deutlich verringert wurde. Die durch warme Emulsionspolymerisation erhaltenen SBR-Partikel besitzen daher gegenüber Kaltpolymerisaten eine sehr breite Molekulargewichtsverteilung und einen **hohen unkontrollierten Verzweigungsgrad.** Eine gezielte Einstellung der viskoelastischen Eigenschaften ist daher nicht möglich (Science and Technology of Rubber, James E. Mark, Burak Erman, Elsevier Academic Press, 2005, Seite 50).

Die **Viskoelastizität** ist ein charakteristisches Materialverhalten in dem Sinne, dass neben Merkmalen der reinen Elastizität auch noch jene einer viskosen Flüssigkeit vorhanden sind, was sich z. B. im Auftreten innerer Reibung bei Deformation zeigt.

Die resultierende **Hysterese** wird typischerweise charakterisiert durch Messung des **Verlustfaktors tan** $\delta$ bei hoher Temperatur (z. B. 60 °C) und ist ein Schlüsselparameter für Gummimischungen im Reifen, insbesondere für Reifenlaufflächen. Sie ist nicht nur ein Indikator für den Hitzeaufbau in Gummimischungen bei dynamischer Beanspruchung (reversibler Dehnung), sondern auch ein guter Indikator für den Rollwiderstand eines Reifens (Rubber Technologist's Handbook, Volume 2; Seite 190). Als Messgröße für Hystereseverluste dient der tan $\delta$, der als Verhältnis von Verlustmodul zu Speichermodul definiert ist; vgl. z. B. auch DIN 53 513, DIN 53 535. Kommerziell erhältliche Versiegelungsmassen, wie beispielsweise ContiSeal® von Continental, weisen einen vergleichsweise hohen tan $\delta$-Wert bei 60 °C, 10 Hz und einer Heizrate von 3 K/min von 0,58 auf.

Die Erniedrigung des tan $\delta$ im anwendungstechnisch relevanten Temperatur/Frequenz- und Amplituden-Bereich führt z. B. zu vermindertem Hitzeaufbau ("heat built-up") in Elastomeren. Ein möglichst geringer Rollwiderstand der Reifen ermöglicht einen möglichst geringen Treibstoffverbrauch der damit ausgestatteten Fahrzeuge.

Unter **Rollwiderstand** versteht man die Umwandlung von mechanischer Energie in Wärme durch den sich drehenden Reifen je Längeneinheit. Die Dimension des Rollwiderstandes ist Joule pro Meter (Scale Moders in Engineering, D. Schuring, Pergamon Press, Oxford, 1977).

Es ist bekannt, sogenannte Kautschukgele in Abmischungen mit verschiedensten Kautschuken in Reifenlaufflächen einzusetzen, um beispielsweise den Rollwiderstand von Kfz-Reifen zu verbessern (siehe z. B. DE-A-4220563**,** GB-A-1078400**,** EP-A-405216 und EP-A-0854171**).**

In DE 60118364 T2**,** EP-A-1149866 **und** EP-A-1291369 wird die Herstellung von **SBR-Mikrogelen** mit Hilfe der kalten Emulsionspolymerisation für Reifenanwendungen beschrieben.

In DE-A-10345043 und DE-A-10-2005-014271 wird offenbart, dass sogenannte Mikrogele auch in unvernetzten Mischungen eingesetzt werden, die einen thermoplastischen Werkstoff oder ein funktionelles Additiv enthalten.

In keiner dieser Schriften wird jedoch die Herstellung von Versiegelungsgelen auf Basis unterschiedlicher Vernetzer mit unterschiedlichem Einbauverhalten zur **Anwendung für Versiegelungsmassen** gelehrt.

Die Versiegelungsmassen müssen im praktischen Einsatz hohen Anforderungen genügen. Sie müssen weich, klebrig und formstabil über die gesamte Breite an Betriebstemperaturen von -40 °C bis +90 °C sein. Gleichzeitig müssen die Versiegelungsmassen auch viskos sein. In Folge eines Eintritts eines Objekts durch die Reifenlauffläche in das Innere des Reifens sollte die Versiegelungsmasse das Objekt umschließen. Tritt das Objekt aus dem Reifen, so wird die an dem Objekt klebende Versiegelungsmasse in die sich ergebende Öffnung gezogen bzw. fließt die Versiegelungsmasse in Folge des Reifeninnendruckes in die Öffnung und verschließt das Loch. Weiterhin müssen diese Versiegelungsmassen eine Gasundurchlässigkeit aufweisen, sodass eine vorübergehende Weiterfahrt ermöglicht wird. Die Versiegelungsmasse sollte in einem einfachen Verfahren auf den Reifeninnerliner aufgetragen werden können.

Die Versiegelungsmassen müssen darüber hinaus eine hohe Adhäsion an den Innerliner aufweisen und eine hohe Kohäsion um formstabil im Reifen zu verbleiben.

Der Stand der Technik zeigt, dass die bekannten Versiegelungsmassen für bestimmte Anwendungszwecke, bei denen neben einem möglichst geringen Rollwiderstand auch gleichzeitig hervorragende Adhäsions- und Kohäsionseigenschaften notwendig sind, noch nicht befriedigend sind.

**Aufgabe** der Erfindung war es daher, **Versiegelungsgele** für die Verwendung in Versiegelungsmassen in selbstversiegelnden Reifen bereitzustellen, die die hohen Anforderungen im praktischen Einsatz, insbesondere hinsichtlich der Adhäsions- und Kohäsionseigenschaften, erfüllen und gegebenenfalls gegenüber dem Stand der Technik verbesserte viskoelastische Eigenschaften aufweisen.

Demgemäß lag eine weitere Aufgabe der vorliegenden Erfindung in der Bereitstellung von **Versiegelungsmassen** mit ausgezeichneter Adhäsion und Kohäsion und mit möglichst geringer Verschlechterung des Rollwiderstandes.

Überraschenderweise wurde gefunden, dass Versiegelungsgele, die aus speziell polymerisierten **Dienkautschukgelen bestehen, die mit unterschiedlichen Vernetzern vernetzt wurden,** für die Herstellung von Selbstversiegelungsmassen für selbstversiegelnde Reifen besonders vorteilhaft sind.

Die **Lösung der Aufgaben** und Gegenstand der vorliegenden Erfindung sind daher **Versiegelungsgele** mit einer Mooney-Viskosität (ML1+4) @ 100 °C von 100 MU bis 170 MU,

i) in Form einer Mischung enthaltend **Dienkautschukgel (A),** mit einer Mooney-Viskosität (ML1+4) @ 100 °C von 170 MU bis 195 MU, erhältlich durch Emulsionspolymerisation bei 5 °C bis 20 °C von mindestens einem konjugierten Dien in Gegenwart von mindestens einem Vernetzer (I) und **Dienkautschukgel (B),** mit einer Mooney-Viskosität (ML1+4) @ 100 °C von 75 MU bis 110 MU, erhältlich durch Emulsionspolymerisation bei 5 °C bis 20 °C von mindestens einem konjugierten Dien in Gegenwart von mindestens einem Vernetzer (II) oder

ii) erhältlich durch Emulsionspolymerisation bei 5 °C bis 20 °C von mindestens einem konjugierten Dien in Gegenwart von mindestens einem Vernetzer (I) und in Gegenwart von mindestens einem Vernetzer (II), im Folgenden als **Versiegelungsgel (H)** bezeichnet,
wobei
Vernetzer (I) Acrylate und Methacrylate von mehrwertigen, vorzugsweise 2- bis 4-wertigen, $C_2$-$C_{20}$-Alkoholen und Vernetzer (II) Verbindungen mit zwei oder mehr Vinyl-, Allyl- oder Isopropenylgruppen oder einer Maleimid-Einheit sind.

Alternativ stellen Versiegelungsgele auch Mischungen von mindestens einem Versiegelungsgel (H) mit Dienkautschukgel (A) oder (B) oder (A) und (B) dar.

Allen Versiegelungsgelen ist als verbindendes Merkmal gemein, dass zu deren Herstellung mindestens ein Vernetzer (I) und mindestens ein Vernetzer (II) benötigt wird. Die erfindungsgemäßen Versiegelungsgele weisen eine Mooney-Viskosität (ML1+4) @ 100 °C von 100 MU bis 170 MU, bevorzugt von 100 MU bis 150 MU, besonders bevorzugt von 100 MU bis 130 MU auf.

Der Begriff **Dienkautschukgel** im Sinne dieser Erfindung ist ein Dienkautschuk, der mit mindestens einem Vernetzer (I) oder mit mindestens einem Vernetzer (II) während der Polymerisation umgesetzt wurde.

Der Begriff **Versiegelungsgel** im Sinne dieser Erfindung umfasst sowohl

i) eine Mischung aus mehreren separat hergestellten **Dienkautschukgelen** der vorgenannten Definition, als auch

ii) ein Versiegelungsgel, das durch die Polymerisation der Monomere zu Dienkautschukgel mit mindestens einem Vernetzer (I) und mindestens einem Vernetzer (II) **gleichzeitig** hergestellt wurde, als auch

iii) eine Mischung aus einem Versiegelungsgel gemäß Punkt ii) mit mindestens einem Dienkautschukgel gemäß der unter Punkt i) vorgenannten Definition.

**Versiegelungsmassen** im Sinne der Erfindung sind Zusammensetzungen, die Versiegelungsgele und weitere Zusatzstoffe enthalten.

In Kombination mit Harzen (C) und optional Alterungsschutzmitteln (D), optional weiterem Natur- und/oder Synthesekautschuk (E) und optional Weichmachern (F) werden somit **Versiegelungsmassen** mit maßgeschneiderter Adhäsion an den Innerliner und Kohäsion sowie niedrigem Rollwiderstand hergestellt.

Es sei an dieser Stelle angemerkt, dass der Rahmen der Erfindung alle beliebigen und möglichen Kombinationen der oben stehenden und im Folgenden aufgeführten, allgemeinen oder in Vorzugsbereichen genannten Komponenten, Wertebereiche bzw. Verfahrensparameter umfasst.

Die **Herstellung der erfindungsgemäßen Versiegelungsgele** erfolgt durch

i-a) Emulsionspolymerisation der Monomere zu Dienkautschukgel bei 5 °C bis 20 °C, wobei Dienkautschukgel (A) hergestellt wird durch die Emulsionspolymerisation bei 5 °C bis 20 °C mit mindestens einem Vernetzer (I) und Dienkautschukgel (B) hergestellt wird durch die Emulsionspolymerisation bei 5 °C bis 20 °C mit mindestens einem Vernetzer

(II) und nachfolgend Mischung der Dienkautschukgele (A) und (B) zum Versiegelungsgel oder

i-b) Emulsionspolymerisation der Monomere bei 5 °C bis 20 °C mit mindestens einem Vernetzer (I) und gleichzeitig mit mindestens einem Vernetzer (II) oder

ii) mischen eines Versiegelungsgels hergestellt nach Verfahren i-b) mit mindestens einem Dienkautschukgel (A) oder (B) oder (A) und (B).

Erfindungsgemäße Versiegelungsgele mit einer Mooney-Viskosität (ML1+4) @ 100 °C von 100 MU bis 170 MU lassen sich gezielt durch Mischung der Dienkautschukgele (A) und (B) in einem Verhältnis A:B = (1:9) bis (9:1), bevorzugt in einem Verhältnis A:B = (4:1) bis (1:4), besonders bevorzugt in einem Verhältnis A:B = (2,5:1) bis (1:2,5) während des Verfahrens zu deren Herstellung einstellen.

Des Weiteren lassen sich erfindungsgemäße Versiegelungsgele mit einer Mooney-Viskosität (ML-1+4) @ 100 °C von 100 MU bis 170 MU gezielt herstellen durch Mischung der Dienkautschukgele (A) und/oder (B) mit Versieglungsgel (H).

Die Vernetzung mit Vernetzer (I) bzw. mit Vernetzer (II) kann wie folgt durchgeführt werden:

a) Der mindestens eine Vernetzer (I) oder der mindestens eine Vernetzer (II) oder mindestens jeweils ein Vernetzer (I) und Vernetzer (II) werden vorgelegt.

b) Der mindestens eine Vernetzer (I) oder der mindestens eine Vernetzer (II) oder mindestens jeweils ein Vernetzer (I) und Vernetzer (II) werden während der Polymerisation zudosiert.

**Kalte Emulsionspolymerisation** ist eine dem Fachmann geläufige Polymerisationsmethode (siehe u.a. US-A-3,565,151 (Spalte 2, Zeile 26), EP-A-1291369 [0055], EP-A-1149866 ([0077], [0080])) Kautschuk Technologie, F. Röthemeyer, F. Sommer, Carl Hanser Verlag München Wien, 2006; Seite 95 f.). **Kalte Emulsionspolymerisation** wird bei einer Temperatur von 5 °C bis 20 °C, bevorzugt von 5 °C bis 15 °C und besonders bevorzugt von 5 °C bis 10 °C durchgeführt. Im Vergleich zur kalten Emulsionspolymerisation wird die warme Emulsionspolymerisation bei einer Temperatur von mehr als 20 °C durchgeführt. Bei der Herstellung der **Dienkautschukgele** (A) und (B) sowie beim Versiegelungsgel (H) durch Emulsionspolymerisation bei 5 °C bis 20 °C wird mindestens ein konjugiertes Dien als radikalisch polymerisierbares **Monomer** eingesetzt.

Beispiele für konjugierte **Diene** sind 1,3-Butadien, 2,3-Dimethyl-1,3-butadien, Isopren und Chloropren, bevorzugt 1,3-Butadien.

Die **Menge an Dienmonomer** beträgt typischerweise 79,8 phm bis 98,8 phm, bevorzugt 86 phm bis 91,8 phm (parts per hundred parts monomer).

Bei der Herstellung der Dienkautschukgele (A) und (B) sowie beim Versiegelungsgel (H) durch Emulsionspolymerisation bei 5 °C bis 20 °C können auch **weitere Monomere** eingesetzt werden, die sich vom eingesetzten Dien unterscheiden.

Bei der Herstellung der erfindungsgemäßen Dienkautschuk- und Versiegelungsgele durch Emulsionspolymerisation werden beispielsweise folgende, radikalisch polymerisierbare Monomere als weitere, vom Dienmonomer unterschiedliche, Monomere eingesetzt: 1,3-Butadien, **Vinylaromaten,** bevorzugt Styrol, 2-Methylstyrol, 3-Methylstyrol, 4-Methylstyrol, α-Methylstyrol, 2,4-Dimethylstyrol, 2,4-Diisopropylstyrol, 4-tert-Butylstyrol und tert-Butoxystyrol, besonders bevorzugt Styrol, Acrylnitril, Isopren, Ester der Acryl- und Methacrylsäure, Tetrafluorethylen, Vinylidenfluord, Hexafluorpropen, 2-Chlorbutadien, 2,3-Dichlorbutadien, doppelbindungshaltige Carbonsäuren, bevorzugt Acrylsäure, Methacrylsäure, Maleinsäure oder Itaconsäure, doppelbindungshaltige Hydroxyverbindungen, bevorzugt Hydroxyethylmethacrylat, Hydroxyethylacrylat oder Hydroxybutylmethacrylat, aminfunktionalisierte (Meth)acrylate, Glycidylmethacrylat, Acrolein, N-Vinyl-2-pyrrolidon, N-Allyl-Harnstoff, N-Allyl-Thioharnstoff, sekundäre Amino-(meth)acrylsäureester bevorzugt 2-tert-Butylaminoethylmethacrylat und 2-tert-Butylaminoethylmethacrylamid oder vinylische Heteroaromaten, wie 2- und 4-Vinylpyridin und 1-Vinylimidazol.

Die Menge an **weiteren Monomeren** beträgt typischerweise 1 phm bis 20 phm, bevorzugt 8 phm bis 14 phm, bezogen auf die Gesamtmenge an Monomeren.

Im Falle eines Vinylaromaten als weiteres Monomer beträgt die **Menge an Vinylaromat** typischerweise 1 phm bis 20 phm, bevorzugt 8 phm bis 14 phm, bezogen auf die Gesamtmenge an Monomeren.

Die Vernetzer (I) und Vernetzer (II) unterscheiden sich durch ein **unterschiedliches Einbauverhalten** während der Emulsionspolymerisation.

**Vernetzer (I)** zeichnen sich durch einen Einbau im frühen Stadium der Polymerisation aus.

Vernetzer (I) sind Acrylate und Methacrylate von mehrwertigen, vorzugsweise 2- bis 4-wertigen, $C_2$-$C_{20}$-Alkoholen.

Bevorzugte Vernetzer (I) sind ausgewählt aus der Gruppe bestehend aus Acrylaten und Methacrylaten von Ethylenglycol, 1,2-Propandiol, 1,4-Butandiol, Hexandiol, Polyethylenglycol mit 2 bis 8, vorzugsweise 2 bis 4 Oxyethyleneinheiten, Neopentylglycol, Bisphenol A, Glycerin, Trimethylolpropan, Pentaerythrit, Sorbit mit ungesättigten Polyestern aus aliphatischen Di- und Polyolen sowie Mischungen hiervon.

Besonders bevorzugte Vernetzer (I) sind Acrylate und Methacrylate von 1,2-Propandiol, 1,4-Butandiol, Neopentylglycol, Bisphenol A, Glycerin, Trimethylolpropan und Pentaerythrit.

Ein ganz besonders bevorzugter Vernetzer (I) ist Trimethylolpropantrimethacrylat (TMPTMA).

**Vernetzer (II)** zeichnen sich durch einen Einbau im späten Stadium der Polymerisation aus.

Vernetzer (II) sind Verbindungen mit zwei oder mehr Vinyl-, Allyl- oder Isopropenylgruppen oder einer Maleimid-Einheit.

Bevorzugte Vernetzer (II) sind ausgewählt aus der Gruppe bestehend aus Diisopropenylbenzol, Divinylbenzol (DVB), Divinylether, Divinylsulfon, Diallylphthalat, Trivinylbenzol, Triallylcyanurat, Triallylisocyanurat, 1,2-Polybutadien, N,N'-m-Phenylenmaleimid, 2,4-Toluylenbis(maleimid) und Triallyltrimellitat sowie Mischungen hiervon.

Besonders bevorzugte Vernetzer (II) sind Diisopropenylbenzol, Divinylbenzol, Trivinylbenzol.

Ein ganz besonders bevorzugter Vernetzer (II) ist Divinylbenzol.

Die **Menge an eingesetztem Vernetzer** für die Herstellung von Dienkautschukgel (A) und (B) sowie für die Herstellung von Versiegelungsgel (H) beträgt im Falle von Vernetzer (I) typischerweise 1 phm bis 6 phm, bevorzugt 1 phm bis 4 phm, und besonders bevorzugt 1,5 phm bis 3 phm und im Falle von Vernetzer (II) 0,2 phm bis 4 phm, bevorzugt 0,2 phm bis 3 phm und besonders bevorzugt 0,5 phm bis 2,7 phm, bezogen auf die Gesamtmenge an Dienmonomer, weiterem Monomer und Vernetzer im Dienkautschukgel (A) oder (B) bzw. dem Versiegelungsgel (H), wobei die Gesamtmenge von Dienmonomer, weiterem Monomer und Vernetzer 100 phm entspricht.

Für die Herstellung von Versieglungsgel (H) werden Vernetzer (I) und Vernetzer (II) bevorzugt in einem Verhältnis von 5:1 bis 1:5 und besonders bevorzugt in einem Verhältnis von 5:1 bis 1:1 eingesetzt.

Emulsionspolymerisationen werden im Allgemeinen unter Einsatz von Emulgatoren durchgeführt. Hierfür sind dem Fachmann eine große Bandbreite von Emulgatoren bekannt und zugänglich. Als Emulgatoren können beispielsweise anionische Emulgatoren oder auch neutrale Emulgatoren eingesetzt werden. Bevorzugt werden anionische Emulgatoren eingesetzt, besonders bevorzugt anionische Emulgatoren in Form wasserlöslicher Salze.

Als **anionische Emulgatoren** können modifizierte Harzsäuren eingesetzt werden, die durch Dimerisierung, Disproportionierung, Hydrierung und Modifikation von Harzsäuregemischen erhalten werden, die Abietinsäure, Neoabietinsäure, Palustrinsäure, Lävopimarsäure enthalten. Eine besonders bevorzugte modifizierte Harzsäure ist die disproportionierte Harzsäure (Ullmann's Encyclopedia of Industrial Chemistry, 2011, 6. Auflage, Band 31, S. 345-355).

Als anionische Emulgatoren können auch Fettsäuren eingesetzt werden. Diese enthalten 6 bis 22 C-Atome pro Molekül. Sie können voll gesättigt sein oder auch eine oder mehrere Doppelbindungen im Molekül enthalten. Beispiele für Fettsäuren sind Capronsäure, Laurinsäure, Myristinsäure, Palmitinsäure, Stearinsäure, Ölsäure, Linolsäure, Linolensäure. Die Carbonsäuren basieren üblicherweise auf herkunftsspezifischen Ölen oder Fetten wie z. B. Rizinusöl, Baumwollsaat, Erdnussöl, Leinsamenöl, Kokosnussfett, Palmkernöl, Olivenöl, Rapsöl, Sojabohnenöl, Fischöl und Rindertalg etc. Bevorzugte Carbonsäuren leiten sich von der Kokosfettsäure und von Rindertalg ab und sind teil- bzw. vollhydriert.

Derartige Carbonsäuren auf Basis modifizierter Harzsäuren bzw. Fettsäuren werden als wasserlösliche Lithium-, Natrium-, Kalium- und Ammoniumsalze verwendet. Die Natrium- und Kaliumsalze sind bevorzugt.

Anionische Emulgatoren sind ferner Sulfonate, Sulfate und Phosphate, die an einen organischen Rest gebunden sind. Als organischer Rest kommen aliphatische, aromatische, alkylierte Aromaten, kondensierte Aromaten, sowie methylenverbrückte Aromaten infrage, wobei die methylenverbrückten und kondensierten Aromaten zusätzlich alkyliert sein können. Die Länge der Alkylketten beträgt 6 bis 25 C-Atome. Die Länge der an die Aromaten gebundenen Alkylketten liegt zwischen 3 und 12 C-Atomen.

Die Sulfate, Sulfonate und Phosphate werden als Lithium-, Natrium-, Kalium- und Ammoniumsalze eingesetzt. Die Natrium-, Kalium und Ammoniumsalze sind bevorzugt.

Beispiele für derartige Sulfonate, Sulfate und Phosphate sind Natrium-Laurylsulfat, Natrium-Alkylsulfonat, Natrium-Alkylarylsulfonat, Natrium-Salze methylenverbrückter Aryl-sulfonate, Natrium-Salze alkylierter Naphthalinsulfonate sowie die Natrium-Salze methylenverbrückter Napthalinsulfonate, die auch oligomerisiert sein können, wobei der Oligomerisierungsgrad zwischen 2 bis 10 liegt. Üblicherweise liegen die alkylierten Naphthalinsulfonsäuren und die methylenverbrückten (und gegebenenfalls alkylierten) Naphthalinsulfonsäuren als Isomerengemische vor, die auch mehr als eine Sulfonsäuregruppe (2 bis 3 Sulfonsäuregruppen) im Molekül enthalten können. Besonders bevorzugt sind Natrium-Laurylsulfat, Natrium-Alkylsulfonatgemische mit 12 bis 18 C-Atomen, Natrium-Alkylarylsulfonate, Natrium-Diisobutylennnaphthalinsulfonat, methylenverbückte Polynaphthalinsulfonatgemische sowie methylenverbrückte Arylsulfonatgemische.

**Neutrale Emulgatoren** leiten sich von Additionsprodukten des Ethylenoxids und des Propylenoxids an Verbindungen mit hinreichend acidem Wasserstoff ab. Hierzu gehören beispielsweise Phenol, alkyliertes Phenol und alkylierte Amine. Die mittleren Polymerisationsgrade der Epoxide liegen zwischen 2 bis 20. Beispiele für neutrale Emulgatoren sind ethoxylierte Nonylphenole mit 8, 10 und 12 Ethylenoxideinheiten. Die neutralen Emulgatoren werden üblicherweise nicht alleine, sondern in Kombination mit anionischen Emulgatoren eingesetzt.

Bevorzugt sind die Natrium- und Kalium-Salze von disproportionierter Abietinsäure und von teilhydrierter Talgfettsäure, sowie Mischungen derselben, Natrium-Laurylsulfat, Natrium-Alkylsulfonate, Natrium-Alkylbenzolsulfonat sowie alkylierte und methylenverbrückte Naphthalinsulfonsäuren.

Die Emulgatoren werden in einer Menge von 0,2 phm bis 15 phm, bevorzugt 0,5 phm bis 12,5 phm, besonders bevorzugt 1,0 phm bis 10 phm bezogen auf die Gesamtmenge von Dienmonomer, weiterem Monomer und Vernetzer eingesetzt.

Die Emulsionspolymerisation wird im Allgemeinen unter Verwendung der genannten Emulgatoren durchgeführt. Falls nach Abschluss der Polymerisation Latices erhalten werden, die aufgrund einer gewissen Instabilität zur vorzeitigen Selbstkoagulation neigen, können die genannten Emulgatoren auch noch zur Nachstabilisierung der Latices zugesetzt werden. Dies kann insbesondere vor der Entfernung nicht umgesetzter Monomerer durch Behandlung mit Wasserdampf sowie vor einer Latexlagerung notwendig werden.

Die Emulsionspolymerisation wird so durchgeführt, dass der erfindungsgemäß bevorzugte SBR-Kautschuk während der Polymerisation vernetzt. Daher ist die Verwendung von **Molgewichtsreglern** im Allgemeinen nicht zwingend. Zur gezielten Steuerung der Vernetzung ist es jedoch vorteilhaft Molekulargewichtsregler einzusetzen, deren Natur jedoch nicht kritisch ist. Der Regler wird dann üblicherweise in einer Menge von 0,01 phm bis 3,5 phm, bevorzugt von 0,05 phm bis 2,5 phm auf 100 phm bezogen auf die Gesamtmenge von Dienmonomer, weiterem Monomer und Vernetzer eingesetzt. Als Molekulargewichtsregler können beispielsweise mercaptanhaltige Carbonsäuren, mercaptanhaltige Alkohole, Xanthogendisulfide, Thiuramdisulfide, halogenierte Kohlenwasserstoffe, verzweigte aromatische oder aliphatische Kohlenwasserstoffe sowie auch lineare oder verzweigte Mercaptane eingesetzt werden. Diese Verbindungen weisen üblicherweise 1 bis 20 Kohlenstoffatome auf.

Beispiele für mercaptanhaltige Alkohole und mercaptanhaltige Carbonsäuren sind Monothioethylenglycol und Mercaptopropionsäure. Beispiele für Xanthogendisulfide sind Dimethylxanthogendisulfid, Diethylxanthogendisulfid und Diisopropylxanthogendisulfid.

Beispiele für Thiuramdisulfide sind Tetramethylthiuramdisulfid, Tetraethylthiuramdisulfid und Tetrabutylthiuramdisulfid. Beispiele für halogenierte Kohlenwasserstoffe sind Tetrachlorkohlenstoff, Chloroform, Methyliodid, Diiodmethan, Difluordiiodmethan, 1,4-Diiodbutan, 1,6-Diiodhexan, Ethylbromid, Ethyliodid, 1,2-Dibromtetrafluorethan, Bromtrifluorethen, Bromdifluorethen.

Beispiele für verzweigte Kohlenwasserstoffe sind diejenigen, von denen leicht ein H-Radikal abgespaltet werden kann. Beispiele hierfür sind Toluol, Ethylbenzol, Cumol, Pentaphenylethan, Triphenylmethan, 2,4-Diphenyl-4-methyl-1-penten, Dipenten sowie Terpene wie z. B. Limonen, $\alpha$-Pinen, $\beta$-Pinen, $\alpha$-Carotin und $\beta$-Carotin.

Beispiele für lineare oder verzweigte Mercaptane sind n-Hexylmercaptan oder auch Mercaptane, die 9 bis 16 Kohlenstoffatome und mindestens drei tertiäre Kohlenstoffatome enthalten, wobei der Schwefel an eines dieser tertiären Kohlenstoffatome gebunden ist. Diese Mercaptane können entweder einzeln oder in Gemischen verwendet werden. Geeignet sind beispielsweise die Additionsverbindungen von Schwefelwasserstoff an oligomerisiertes Propen, insbesondere tetrameres Propen, oder an oligomerisiertes Isobuten, insbesondere trimeres Isobuten, die in der Literatur häufig als tertiäres Dodecylmercaptan ("t-DDM") bezeichnet werden.

Solche Alkylthiole bzw. (Isomeren)-Mischungen von Alkylthiolen sind entweder käuflich erhältlich oder aber nach Verfahren, die in der Literatur hinlänglich beschrieben sind, für den Fachmann herstellbar (siehe z. B. JP-A-07-316126, JP-A-07-316127 und JP-A-07-316128 sowie GB-A-823,823 und GB-A-823,824.)

Die einzelnen Alkylthiole bzw. deren Gemische werden üblicherweise in einer Menge von 0,05 phm bis 3 phm, vorzugsweise von 0,1 phm bis 1,5 phm bezogen auf die Gesamtmenge von Dienmonomer, weiterem Monomer und Vernetzer eingesetzt.

Die Dosierung des Molekulargewichtsreglers bzw. der Molekulargewichtsreglermischung erfolgt entweder zu Beginn der Polymerisation oder aber portionsweise im Verlauf der Polymerisation, wobei die portionsweise Zugabe sämtlicher oder einzelner Komponenten der Reglermischung während der Polymerisation bevorzugt ist.

Zur Initiierung der Emulsionspolymerisation werden typischerweise **Polymerisationsinitiatoren** eingesetzt, die in Radikale zerfallen (radikalische Polymerisationsinitiatoren). Hierzu gehören Verbindungen, die eine -O-O- Einheit (Peroxo-Verbindungen) oder eine -N=N- Einheit (Azoverbindung) enthalten.

Zu den Peroxoverbindungen gehören Wasserstoffperoxid, Peroxodisulfate, Peroxodiphosphate, Hydroperoxide, Persäuren, Persäureester, Persäureanhydride und Peroxide mit zwei organischen Resten. Geeignete Salze der Peroxodischwefelsäure und der Peroxodiphosphorsäure sind die Natrium-, Kalium- und Ammoniumsalze. Geeignete Hydroperoxide sind z. B. tert-Butylhydroperoxid, Cumolhydroperoxid und p-Menthanhydroperoxid. Geeignete Peroxide mit zwei organischen Resten sind Dibenzoylperoxid, 2,4-Dichlorbenzoylperoxid, Di-tert-Butylperoxid, Dicumylperoxid, tert-Butylperbenzoat, tert-Butylperacetat etc. Geeignete Azoverbindungen sind Azobisisobutyronitril, Azobisvaleronitril und Azobiscyclohexannitril.

Wasserstoffperoxid, Hydroperoxide, Persäuren, Persäureester, Peroxodisulfat und Peroxodiphosphat werden auch in Kombination mit Reduktionsmitteln eingesetzt. Geeignete Reduktionsmittel sind Sulfenate, Sulfinate, Sulfoxylate, Dithionit, Sulfit, Metabisulfit, Disulfit, Zucker, Harnstoff, Thioharnstoff, Xanthogenate, Thioxanthogenate, Hydrazinsalze, Amine und Aminderivate wie Anilin, Dimethylanilin, Monoethanolamin, Diethanolamin oder Triethanolamin. Initiatorsysteme, die aus einem Oxidations- und einem Reduktionsmittel bestehen, bezeichnet man als Redoxsysteme. Bei der Verwendung von Redoxsystemen verwendet man häufig zusätzlich Salze von Übergangsmetallverbindungen wie Eisen, Cobalt oder Nickel in Kombination mit geeigneten Komplexbildnern wie Natrium-Ethylendiamintetraacetat, Natrium-Nitrilotriacetat sowie Trinatriumphosphat oder Tetrakaliumdiphosphat.

Bevorzugte Redoxsysteme sind beispielsweise: 1) Kaliumperoxodisulfat in Kombination mit Triethanolamin, 2) Ammoniumperoxodiphosphat in Kombination mit Natriummetabisulfit ($Na_2S_2O_5$), 3) p-Menthanhydroperoxid/Natriumformaldehydsulfoxylat in Kombination mit Fe-II-Sulfat ($FeSO_4 * 7 H_2O$), Natrium-Ethylendiaminoacetat und Trinatriumphosphat; 4) Cumolhydroperoxid / Natriumformaldehydsulfoxylat in Kombination mit Fe-II-Sulfat ($FeSO_4 * 7 H_2O$), Natrium-Ethylendiaminacetat und Tetrakaliumdiphosphat.

Die Menge an Oxidationsmittel beträgt bevorzugt 0,001 phm bis 1 phm bezogen auf 100 phm bezogen auf die Gesamtmenge von Dienmonomer, weiterem Monomer und Vernetzer. Die molare Menge an Reduktionsmittel liegt zwischen 50 % bis 500 % bezogen auf die molare Menge des eingesetzten Oxidationsmittels.

Die molare Menge an Komplexbildner bezieht sich auf die Menge an eingesetztem Übergangsmetall und ist mit diesem üblicherweise äquimolar.

Zur Durchführung der Polymerisation werden sämtliche oder einzelne Komponenten des Initiatorsystems zu Beginn der Polymerisation oder während der Polymerisation zudosiert.

Die portionsweise Zugabe sämtlicher sowie einzelner Komponenten des Aktivatorsystems während der Polymerisation ist bevorzugt. Durch die sequentielle Zugabe lässt sich die Reaktionsgeschwindigkeit steuern.

Die Polymerisationszeit liegt im Allgemeinen im Bereich von 5 h bis 30 h.

Der **Umsatz** der Emulsionspolymerisation bei 5 °C bis 20 °C liegt im Bereich von 85 % bis 100 %, bevorzugt 87 % bis 99,5 % und besonders bevorzugt 88 % bis 97 %.

Bei der Polymerisation werden sehr hohe Polymerisationsumsätze angestrebt, um den Kautschuk zu vernetzen. Aus diesem Grund kann gegebenenfalls auf die Verwendung von Stoppern verzichtet werden. Werden Stopper verwendet, so eignen sich beispielsweise Dimethyldithiocarbamat, Natriumnitrit, Mischungen von Dimethyldithiocarbamat und Natriumnitrit, Hydrazin und Hydroxylamin sowie hiervon abgeleitete Salze wie Hydrazinsulfat und Hydroxylammoniumsulfat, Diethylhydroxylamin, Diisopropylhydroxylamin, wasserlösliche Salze des Hydrochinons, Natriumdithionit, Phenyl-$\alpha$-naphthylamin und aromatische Phenole wie tert-Butylbrenzkatechol oder Phenothiazin.

Die bei der Emulsionspolymerisation verwendete **Wassermenge** liegt im Bereich von 70 bis 300 phm, bevorzugt im Bereich von 80 bis 250 phm, besonders bevorzugt im Bereich von 90 bis 200 phm Wasser bezogen auf die Gesamtmenge von Dienmonomer, weiterem Monomer und Vernetzer.

Zur **Reduktion der Viskosität** während der Polymerisation, zur pH-Einstellung sowie als pH-Puffer können der wässrigen Phase bei der Emulsionspolymerisation Salze zugesetzt werden. Typische Salze sind Salze einwertiger Metalle in Form von Kalium- und Natriumhydroxid, Natriumsulfat, Natriumcarbonat, Natriumhydrogencarbonat, Natriumchlorid und Kaliumchlorid. Bevorzugt sind Natrium- und Kaliumhydroxid, Natriumhydrogencarbonat und Kaliumchlorid. Die Mengen dieser Elektrolyte liegen im Bereich 0 bis 1 phm, vorzugsweise 0 bis 0,5 phm bezogen auf die Gesamtmenge von Dienmonomer, weiterem Monomer und Vernetzer.

Zur Erzielung eines gleichmäßigen Polymerisationsverlaufs wird für den Start der Polymerisation **nur ein Teil des Initiatorsystems** verwendet und der Rest während der Polymerisation **nachdosiert.** Üblicherweise startet man die Polymerisation mit 10 Gew.-% bis 80 Gew.-%, vorzugsweise 30 Gew.-% bis 50 Gew.-%, der Gesamtmenge an Initiator. Auch die Nachdosierung einzelner Bestandteile des Initiatorsystems ist möglich.

Die Polymerisation kann entweder diskontinuierlich, semikontinuierlich oder auch kontinuierlich in einer Rührkesselkaskade durchgeführt werden. Im Fall des **Semi-Batch-Verfahrens** werden Wasser, Monomere, Initiatoren und Emulgatoren über einen bestimmten Zeitraum (z. B. während der gesamten Polymerisationszeit) in den Reaktor zugeführt. Es gibt verschiedene Methoden der Zugabe von Edukten: Z. B. kann zu einer Vorlage aus Wasser, Emulgator und Initiator und häufig auch einer bestimmten Menge an Monomer während der Polymerisation der Rest an Monomer (oft zusammen mit Initiator) zudosiert werden. Eine andere Methode ist beispielsweise das Vorlegen eines Teils der Emulsion, die alle Edukte enthält, und die Zudosierung der restlichen Emulsion während der Polymerisation, wobei die Zusammensetzung der zudosierten Emulsion sich von der vorgelegten Emulsion für den Start der Polymerisation unterscheiden kann (A. E. Hamielec, H. Tobita, Polymerization Processes, 1. Fundamentals. Ullmann's Encyclopedia of Industrial Chemistry, 2011, Seite 88).

Die Vorteile eines solchen Semi-Batch-Verfahrens sind nicht nur die bessere Kontrolle der Polymerisation und der Wärmeabführung, weil die Zudosierungsrate während der Polymerisation verändert werden kann. Die Konzentration der nicht umgesetzten Monomere kann mit dieser Methode minimiert werden, sodass durch die bessere Kontrolle die Sicherheit der Reaktion erhöht wird. Außerdem kann die Produktivität gesteigert werden, wenn man die zudosierte Menge vorher abkühlt, weil weniger Kühlung während der Polymerisation benötigt wird.

Wenn man bei der Semi-Batch-Emulsionspolymerisation die Zudosierungszeit der Monomere erhöht, so bleibt die Konzentration der Monomere während der Polymerisation niedrig und führt dazu, dass Langkettenverzweigungen und Vernetzungen begünstigt werden (A. E. Hamielec, H. Tobita, Polymerization Processes, 1. Fundamentals. Ullmann's Encyclopedia of Industrial Chemistry, 2011, Seite 85).

Zur Entfernung nicht umgesetzter Monomere sowie flüchtiger Bestandteile wird der abgestoppte Latex einer **Wasserdampfdestillation** unterzogen. Hierbei werden Temperaturen im Bereich von 70 °C bis 150 °C angewandt, wobei bei Temperaturen <100 °C der Druck reduziert wird.

Vor der Entfernung der flüchtigen Bestandteile kann eine Nachstabilisierung des Latex mit Emulgator erfolgen. Hierfür verwendet man zweckmäßigerweise die zuvor genannten Emulgatoren in Mengen von 0,1 Gew.-% bis 2,5 Gew.-%, vorzugsweise 0,5 Gew.-% bis 2,0, Gew.-%, bezogen auf 100 Gew.-Teile Kautschuk.

Vor oder während der Fällung können dem Latex ein oder mehrere **Alterungsschutzmittel** zugesetzt werden. Hierfür eigenen sich phenolische, aminische und auch sonstige Alterungsschutzmittel.

Geeignete phenolische Alterungsschutzmittel sind alkylierte Phenole, styrolisiertes Phenol, sterisch gehinderte Phenole wie 2,6-Di-tert-butylphenol, 2,6- Di-tert-butyl-p-kresol (BHT), 2,6-Di-tert-butyl-4-ethylphenol, estergruppenhaltige sterisch gehinderte Phenole, thioetherhaltige sterisch gehinderte Phenole, 2,2'-Methylen-bis-(4-methyl-6-tert-butylphenol) (BPH) sowie sterisch gehinderte Thiobisphenole.

Falls eine Verfärbung des Kautschuks ohne Bedeutung ist, werden auch aminische Alterungsschutzmittel z. B. Mischungen aus Diaryl-p-phenylendiaminen (DTPD), octyliertes Diphenylamin (ODPA), Phenyl-$\alpha$-naphthylamin (PAN), Phenyl-$\beta$-naphthylamin (PBN), vorzugsweise solche auf Phenylendiaminbasis eingesetzt. Beispiele für Phenylendiamine sind N-Isopropyl-N'-phenyl-p-phenylendiamin, N-1,3-Dimethylbutyl-N'-phenyl-p-phenylendiamin (6PPD), N-1,4-Dimethylpentyl-N'-phenyl-p-phenylendiamin (7PPD), N,N'-Bis-1,4-dimethylpentyl)-p-phenylendiamin (77PD) etc.

Zu den sonstigen Alterungsschutzmitteln gehören Phosphite wie Tris-(nonylphenyl)phosphit, polymerisiertes 2,2,4-Trimethyl-1,2-dihydrochinolin (TMQ), 2-Mercaptobenzimidazol (MBI), Methyl-2-mercaptobenzimidazol (MMBI), Zinkmethylmercaptobenzimidazol (ZMMBI). Die Phosphite werden im allgemeinen in Kombination mit phenolischen Alterungsschutzmitteln eingesetzt.

Die **Aufarbeitung** der so hergestellten Dienkautschukgele kann durch Eindampfen, Koagulation, Cokoagulation mit einem weiteren Latexpolymer, durch Gefrierkoagulation (vgl. US-2,187,146) oder durch Sprühtrocknung erfolgen. Bei der Aufarbeitung durch Sprühtrocknung können auch handelsübliche Fließhilfen wie beispielsweise Calciumcarbonat oder Kieselsäure zugesetzt werden. Bevorzugt ist eine Aufarbeitung durch Säurekoagulation, gegebenenfalls im Gegenwart von einwertigen Salzen, wie Natriumchlorid und/oder Kaliumchlorid. Als Säure eignen sich insbesondere Mineralsäuren, wie Schwefelsäure oder Phosphorsäure.

Als Dienkautschukgele zur Herstellung der Versiegelungsmassen können sowohl **nichtmodifizierte** Dienkautschukgele, die im Wesentlichen keine reaktiven Gruppen insbesondere an der Oberfläche aufweisen, als auch **modifizierte,** mit funktionellen Gruppen insbesondere an der Oberfläche modifizierte Dienkautschukgele verwendet werden. Für eine **Oberflächenmodifikation** der Dienkautschukgele mit niedermolekularen Agentien kommen insbesondere folgende Reagentien in Frage: elementarer Schwefel, Schwefelwasserstoff und/oder Alkylpolymercaptane wie 1,2-Dimercaptoethan oder 1,6-Dimercaptohexan, des Weiteren Dialkyl- und Dialkylaryldithiocarbamat wie die Alkalisalze von Dimethyldithiocarbamat und/oder Dibenzyldithiocarbamat, ferner Alkyl- und Arylxanthogenate wie Kaliumethylxanthogenat und Natriumisopropylxanthogenat sowie die Umsetzung mit den Alkali- oder Erdalkalisalzen der Dibutyldithiophosphorsäure und Dioctyldithiophosphorsäure sowie Dodecyldithiophosphorsäure. Die genannten Reaktionen können vorteilhafterweise auch in Gegenwart von Schwefel durchgeführt werden, wobei der Schwefel unter Bildung polysulfidischer Bindungen mit eingebaut wird. Zur Addition dieser Verbindungen können Radikalstarter wie organische und anorganische Peroxide und/oder Azoinitiatoren zugesetzt werden.

Auch eine Modifikation der Dienkautschukgele wie z. B. durch Ozonolyse sowie durch Halogenierung mit Chlor, Brom und Iod kommen infrage. Die Menge des eingesetzten Modifizierungsmittels richtet sich nach dessen Wirksamkeit und den im Einzelfall gestellten Anforderungen und liegt im Bereich von 0,05 Gew.-% bis 30 Gew.-%, bezogen auf die Gesamtmenge an eingesetztem Dienkautschukgel, besonders bevorzugt sind 0,5 Gew.-% bis 10 Gew.-% bezogen auf Gesamtmenge an Dienkautschukgel.

Die Modifizierungsreaktionen können bei Temperaturen von 0 °C bis 180 °C, bevorzugt 5 °C bis 95 °C, ggf. unter Druck von 1 bar bis 30 bar (1 bar = 100.000 Pa), durchgeführt werden. Die Modifizierungen können an Dienkautschukgelen in Substanz oder in Form ihrer Dispersion vorgenommen werden.

Die Dienkautschukgele weisen eine annähernd kugelförmige **Geometrie** auf. Als Primärpartikel werden nach DIN 53206:1992-08 die durch geeignete physikalische Verfahren (Elektronenmikroskop) als Individuen erkennbare, in der kohärenten Phase dispergierten Dienkautschukgel-Teilchen bezeichnet (vgl. z. B. Römpp Lexikon, Lacke und Druckfarben, Georg Thieme Verlag, 1998). Eine "annähernd kugelförmige" Geometrie bedeutet, dass die dispergierten Primärpartikel der Dienkautschukgele bei der Ansicht der Zusammensetzung, beispielsweise mit einem Elektronenmikroskop, erkennbar im Wesentlichen eine kreisförmige Fläche abbilden. Da die Dienkautschukgele bei der Weiterverarbeitung zu erfindungsgemäßen Versiegelungsmassen ihre Form bzw. Morphologie im Wesentlichen nicht verändern, gelten die vorstehenden und nachstehenden Ausführungen in gleicher Weise auch für die Dienkautschukgel-enthaltenden erfindungsgemäßen Versiegelungsmassen.

In den in der erfindungsgemäßen Versiegelungsmasse enthaltenen Primärpartikeln des Dienkautschukgels beträgt die Abweichung der Durchmesser eines einzelnen Primärpartikels, definiert als

$$[(d1 - d2) / d2] \times 100,$$

worin d1 und d2 zwei beliebige Durchmesser des Primärpartikels sind und d1 > d2 ist, bevorzugt weniger als 250 %, bevorzugter weniger als 100 %, noch bevorzugter weniger als 80 %, noch bevorzugter weniger als 50 %.

Bevorzugt weisen mindestens 80 %, bevorzugter mindestens 90 %, noch bevorzugter mindestens 95 % der Primärpartikel des Dienkautschukgels eine Abweichung der Durchmesser, definiert als

$$[(d1 - d2) / d2] \times 100,$$

worin d1 und d2 zwei beliebige Durchmesser des Primärpartikels sind und d1 > d2 ist, von weniger als 250 %, bevorzugt weniger als 100 %, noch bevorzugter weniger als 80 %, noch bevorzugter weniger als 50 % auf.

Die vorstehend erwähnte Abweichung der Durchmesser der einzelnen Partikel kann nach folgendem Verfahren bestimmt werden. Zunächst wird ein Dünnschnitt der erfindungsgemäßen verfestigten Zusammensetzung hergestellt. Dann wird eine transmissionselektronenmikroskopische Aufnahme bei einer Vergrößerung von beispielsweise 10.000-fach oder 200.000-fach hergestellt. In einer Fläche von 833,7 x 828,8 nm wird an 10 Dienkautschukgel-Primärpartikeln der größte und der kleinste Durchmesser als d1 und d2 bestimmt. Liegt die oben definierte Abweichung bei mindestens 80 %, bevorzugter mindestens 90 %, noch bevorzugter mindestens 95 % der vermessenen Dienkautschukgel-Primärpartikeln jeweils unter 250 %, bevorzugter unter 100 %, noch bevorzugter weniger als 80 %, noch bevorzugter unter 50 %, so weisen die Dienkautschukgel-Primärpartikeln das oben definierte Merkmal der Abweichung auf.

Liegt in der Versiegelungsmasse die Konzentration der Dienkautschukgele so hoch, dass eine starke Überlagerung der sichtbaren Dienkautschukgel-Primärpartikel erfolgt, kann die Auswertbarkeit durch vorheriges, geeignetes Verdünnen der Messprobe verbessert werden.

In der erfindungsgemäßen Versiegelungsmasse weisen die Primärpartikel der Dienkautschukgele (A) und (B) und des Versiegelungsgels (H) bevorzugt einen **durchschnittlichen Teilchendurchmesser** von 5 nm bis 500 nm, bevorzugter von 20 nm bis 400 nm, bevorzugter von 20 nm bis 300 nm, bevorzugter von 20 nm bis 250 nm, noch bevorzugter 20 nm bis 99 nm, noch bevorzugter 30 nm bis 80 nm auf (Durchmesserangaben nach DIN 53206). Die Herstellung besonders feinteiliger Dienkautschukgele durch Emulsionspolymerisation erfolgt durch Steuerung der Reaktionsparameter in an sich bekannter Weise (s. z. B. H.G. Elias, Macromolecules, Volume 2, Industrial Polymers and Syntheses, Wiley-VCH Verlag GmbH & Co. KGaA, Weinheim, 2007, Seite 160 ff).

Da sich die Morphologie der Dienkautschukgele (A) und (B) sowie des Versiegelungsgels (H) bei der Weiterverarbeitung der erfindungsgemäßen Zusammensetzung im Wesentlichen nicht verändert, entspricht der durchschnittliche Teilchendurchmesser der dispergierten Primärpartikel in den mit der erfindungsgemäßen Zusammensetzung erhaltenen Weiterverarbeitungsprodukten, wie Dienkautschukgel-enthaltenden Versiegelungsmassen, im Wesentlichen dem durchschnittlichen Teilchendurchmesser der dispergierten Primärpartikel.

Die Dienkautschukgele (A) und (B) und das Versiegelungsgel (H) weisen in Toluol bei 23 °C **unlösliche Anteile,** genannt **Gelgehalt,** von mindestens 60 Gew.-%, bevorzugter mindestens etwa 80 Gew.-%, noch bevorzugter mindestens etwa 90 Gew.-% auf.

Die Dienkautschukgele (A) und (B) sowie das Versiegelungsgel (H) weisen zweckmäßig in Toluol bei 23 °C einen **Quellungsindex** von weniger als etwa 80, bevorzugter von weniger als 60, noch bevorzugter von weniger als 40 auf. So können die Quellungsindizes (Qi) der Dienkautschukgele und Versiegelungsgele besonders bevorzugt von 5 bis 35 liegen.

Die Dienkautschukgele (A) und (B) sowie das Versiegelungsgel (H) weisen eine **Glasübergangstemperatur** von -80 °C bis -50 °C, bevorzugt von -75 °C bis -60 °C und besonders bevorzugt von -75 °C bis -65 °C auf.

Weiterhin weisen die Dienkautschukgele (A) und (B) sowie das Versiegelungsgel (H) bevorzugt eine Breite des Glasübergangs (ΔTg) von kleiner als 20 °C, bevorzugt kleiner als 15 °C, bevorzugter kleiner als 10 °C auf, besonders bevorzugt in dem Bereich von 5 °C bis 10 °C.

Kaltpolymerisierte Dienkautschukgele (A) und (B) sowie Versiegelungsgel (H) unterscheiden sich in ihre **Mikrostruktur** von nicht-erfindungsgemäßen warmpolymerisierten Dienkautschukgelen (W).

Beispielsweise bezieht sich im Falle von 1,3-Butadien als eingesetztem Dien-Monomer der Unterschied in der Mikrostruktur auf die relativen Anteile an eingebautem 1,3-Butadien.

Die Ermittlung der relativen Anteile an 1,4-trans-, 1,2-Vinyl- und 1,4-cis-Butadien-Einheiten erfolgte anhand der Messung der relativen Absorptionen von 1,4-trans-, 1,2-Vinyl- und 1,4-cis-Butadien-Banden in IR-Spektren von Polymerfilmen des Dienkautschukgels. Die Methode wird mit Kautschuk-Proben kalibriert, deren Mikrostruktur aus NMR-Untersuchungen genau bekannt ist. Die Angaben in Gew.-% beziehen sich nur auf die eingebauten Butadien-Einheiten im Dienkautschukgel und ergeben zusammen 100 Gew.-%.

Die Dienkautschukgele (A) und (B) sowie das Versiegelungsgel (H) enthaltend 1,3-Butadien als Dien weisen jeweils einen **Anteil an cis-1,4-Butadien-Einheiten** von 8 Gew.-% bis 17 Gew.-%, einen Anteil an trans-1,4-Butadien von 59 Gew.-% bis 75 Gew.-%; und einen Anteil an 1,2-Vinyl-Butadien von 17 Gew.-% bis 21 Gew.-% bezogen auf eingebautes 1,3-Butadien auf.

Weiterhin umfasst die Erfindung eine **Versiegelungsmasse** enthaltend Versiegelungsgel und

mindestens ein Harz (C).

In einer bevorzugten Ausführungsform enthält die Versiegelungsmasse

Versiegelungsgel,

mindestens ein Harz (C) und

mindestens einen Natur- und/oder Synthesekautschuk (E), welches sich vom Versiegelungsgel unterscheidet.

In einer weiter bevorzugten Ausführungsform enthält die Versiegelungsmasse

Versiegelungsgel,

mindestens ein Harz (C),

mindestens ein Alterungsschutzmittel (D) und

mindestens einen Natur- und/oder Synthesekautschuk (E), welches sich vom Versiegelungsgel unterscheidet.

In der am meisten bevorzugten Ausführungsform enthält die Versiegelungsmasse

Versiegelungsgel,

mindestens ein Harz (C),

mindestens ein Alterungsschutzmittel (D),

mindestens einen Natur- und/oder Synthesekautschuk (E), welches sich vom Versiegelungsgel unterscheidet und

mindestens einen Weichmacher (F).

Die zuvor genannten Versiegelungsmassen können darüber hinaus noch weitere Bestandteile wie Füllstoffe und Kautschukhilfsmittel enthalten.

Die erfindungsgemäßen Versiegelungsmassen enthalten die erfindungsgemäßen **Versiegelungsgele,** wie sie oben beschrieben sind. In einer bevorzugten Ausführungsform der erfindungsgemäßen Zusammensetzung basiert das Dienkautschukgel auf E-SBR.

Die **Gesamtmenge** der erfindungsgemäßen **Versiegelungsgele** in der Versiegelungsmasse beträgt typischerweise 45 phr bis 100 phr, bevorzugt 60 phr bis 100 phr, besonders bevorzugt 70 phr bis 100 phr (parts per hundred rubber), wobei die Gesamtmenge aus Versiegelungsgel und weiterem Natur- und/oder Synthesekautschuk 100 phr entspricht.

Als **Harz (C)** wird zweckmäßigerweise solches aus der Gruppe der Kohlenwasserstoffharze eingesetzt. Unter Kohlenwasserstoffharzen versteht der Fachmann Polymere basierend auf Kohlenstoff und Wasserstoff, die bevorzugt als Klebrigmacher in Polymermischungen eingesetzt werden. Sie sind in der eingesetzten Menge mischbar (kompatibel, verträglich) mit der Polymermischung und wirken als Verdünnungsmittel/Streckmittel in der Mischung. Die Kohlenwasserstoffharze können aliphatische, cycloaliphatische, aromatische und/oder hydrierte Aromaten-Monomere enthalten. Unterschiedliche synthetische und/oder natürliche Harze können verwendet werden und können ölbasiert sein (Mineralölharze). Die Tg der eingesetzten Harze sollte über 0 °C liegen. Die Kohlenwasserstoffharze können auch als thermoplastische Harze beschrieben werden, die beim Erwärmen erweichen und somit geformt werden können. Sie können charakterisiert werden durch den Erweichungspunkt oder diejenige Temperatur, bei der das Harz, z. B. in Form von Granulaten, zusammenklebt.

Die bevorzugt eingesetzten Harze besitzen mindestens eine, bevorzugt alle der folgenden Eigenschaften:

- Tg größer als 25 °C,

- Erweichungspunkt größer als 50 °C (insbesondere im Bereich von 50 °C bis 135 °C),

- das zahlengemittelte Molekulargewicht (Mn) liegt im Bereich von 400 g/mol bis 2.000 g/mol,

-    die Polydispersität (PDI = Mw/Mn, mit Mw = Gewichtsmittel des Molekulargewichts) ist kleiner als 3.

Der Erweichungspunkt wird gemäß der Methode Standard ISO4625 "Ring and Ball" bestimmt. Mn und Mw können mittels dem Fachmann geläufigen Techniken, beispielsweise der Gelpermeationschromatographie (GPC) bestimmt werden.

Beispiele für die eingesetzten Kohlenwasserstoffharze sind Cyclopentadien- (CPD) oder Dicyclopentadien (DCPD)-Homopolymer oder Cyclopentadien-Copolymer-Harze, Terpen-Homopolymer- oder -Copolymer-Harze, Terpen/Phenol-Homopolymer oder -Copolymer-Harze, Homopolymer- oder Copolymer-Harze der $C_5$-Fraktion, der $C_9$-Fraktion, Homo- oder Copolymer-Harze aus $\alpha$-Methylstyrol und Mischungen aus den beschriebenen. Besonders erwähnt seien hier die Copolymer-Harze bestehend aus (D)CPD/Vinylaromat-Copolymer-Harzen, (D)CPD/Terpen-Copolymer-Harzen, (D)CPD/$C_5$-Fraktion- Copolymer-Harzen, (D)CPD/$C_9$-Fraktion-Copolymer-Harzen, Terpen/Vinylaromat-Copolymer-Harzen, Terpen/Phenol-Copolymer-Harzen, $C_5$-Fraktion/Vinylaromat-Copolymer-Harzen und Mischungen aus den beschriebenen.

Unter dem Begriff Terpen werden Monomere basierend auf $\alpha$-Pinen, $\beta$-Pinen und Limonen zusammengefasst, wobei Limonen oder eine Mischung der Limonenenantiomeren bevorzugt sind. Geeignete Vinylaromaten sind z. B. Styrol, $\alpha$-Methylstyrol, o-Methylstyrol, m-Methylstyrol, p-Methylstyrol, Vinyltoluol, p-(tert-Butyl)-styrol, Methoxystyrol, Chlorstyrol, Hydroxystyrol, Vinylmesitylen, Divinylbenzol, Vinylnaphthalen oder jeder Vinylaromat aus der $C_9$-Fraktion oder aus der $C_8$- bis $C_{10}$-Fraktion.

Die Menge an Harz (C) in der erfindungsgemäßen Versiegelungsmasse beträgt typischerweise 10 phr bis 60 phr, bevorzugt 20 phr bis 50 phr, besonders bevorzugt 25 phr bis 45 phr, bezogen auf die Gesamtmenge an Versiegelungsgel und weiterem Natur- und/oder Synthesekautschuk (E).

Als **Alterungsschutzmittel (D)** können dieselben Substanzen verwendet werden, wie oben beschrieben bei der kalten Emulsionspolymerisation der Dienkautschukgele (A), (B) und Versiegelungsgel (H).

Die Menge an Alterungsschutzmittel (D) in der Versiegelungsmasse beträgt typischerweise 0,5 phr bis 20 phr, bevorzugt 1 phr bis 10 phr, besonders bevorzugt 1 phr bis 5 phr, bezogen auf die Gesamtmenge an Versiegelungsgel und weiterem Natur- und/oder Synthesekautschuk (E).

Die **Natur- und Synthesekautschuke (E)** unterscheiden sich von den Dienkautschukgelen und Versiegelungsgelen und besitzen in der Regel Mooney-Viskositäten ML (1+4)@100 °C (DIN 53 523) von 10 MU bis 80 MU, vorzugsweise 15 MU bis 60 MU.

Bevorzugte Kautschuke (E) sind Copolymere auf Basis konjugierter Diolefine aus einer Gruppe enthaltend 1,3-Butadien, Isopren, 2,3-Dimethyl-1,3-butadien, 1,3-Pentadien, 1,3-Hexadien, 3-Butyl-1,3-octadien, 2-Phenyl-1,3-butadien oder Mischungen davon, besonders bevorzugt aus einer Gruppe enthaltend natürliches cis-1,4-Polyisopren, synthetisches cis-1,4-Polyisopren, 3,4-Polyisopren, Polybutadien, 1,3-Butadien-Acrylonitril-Copolymer und Mischungen davon.

Weitere bevorzugte Synthesekautschuke sind beispielsweise bei I. Franta, Elastomers and Rubber Compounding Materials, Elsevier, New York 1989, oder auch in Ullmann's Encyclopedia of Industrial Chemistry, Vol. A 23, VCH Verlagsgesellschaft, Weinheim 1993, beschrieben. Sie umfassen u.a.

BR-        Polybutadien,

Nd-BR -    Neodym-Polybutadien-Kautschuk,

Co-BR -    Cobalt-Polybutadien-Kautschuk,

Li-BR -    Lithium-Polybutadien-Kautschuk,

Ni-BR -    Nickel-Polybutadien-Kautschuk,

Ti-BR -    Titan-Polybutadien-Kautschuk,

PIB -      Polyisobutylen,

ABR -      Butadien/Acrylsäure-$C_{1-4}$-alkylester-Copolymere,

IR -       Polyisopren,

SBR -      Styrol/Butadien-Copolymerisate mit Styrolgehalten von 1 Gew.-% bis 60 Gew.-%, vorzugsweise 2 Gew.-% bis 50 Gew.-%,

E-SBR -  Emulsions-Styrol/Butadien-Copolymere,

S-SBR -  Solution-Styrol/Butadien-Copolymere,

XSBR -  Styrol/Butadien-Copolymerisate und Pfropfpolymerisate mit Acrylsäure, Methacrylsäure, Acrylnitril, Hydroxyethylacrylat und/oder Hydroxyethylmethacrylat, Glycidylmethacrylat mit Styrolgehalten von 2 Gew.-% bis 50 Gew.-% und Gehalten an einpolymerisierten polaren Monomeren von 1 Gew.-% bis 30 Gew.-%,

IIR -  Isobutylen/Isopren-Copolymerisate, bevorzugt mit Isoprengehalten von 0,5 Gew.-% bis 10 Gew.-%

BIIR -  bromierte Isobutylen/Isopren-Copolymerisate, bevorzugt mit 0,1 Gew.-% bis 10 Gew.-% Bromgehalt,

CIIR -  chlorierte Isobutylen/Isopren-Copolymerisate, bevorzugt mit 0,1 Gew.-% bis 10 Gew.-% Chlorgehalt,

NBR -  Butadien/Acrylnitril-Copolymere, typischerweise mit Acrylnitrilgehalten von 5 Gew.-% bis 60 Gew.-%, vorzugsweise 10 Gew.-% bis 50 Gew.-%,

HNBR -  voll- und teilhydrierten NBR-Kautschuk, in dem bis zu 100 % der Doppelbindungen hydriert sind,

HXNBR -  carboxylierte teil- und vollhydrierte Nitrilkautschuke,

EP(D)M -  Ethylen/Propylen/(Dien)-Copolymerisate,

sowie Mischungen dieser Kautschuke.

Die **Menge an Natur- und/oder Synthesekautschuk (E)** in erfindungsgemäßen Versiegelungsmassen beträgt typischerweise 0 phr bis 55 phr, bevorzugt 0 phr bis 40 phr, besonders bevorzugt 0 phr bis 30 phr, bezogen auf die Gesamtmenge an Versiegelungsgel und weiterem Natur- und/oder Synthesekautschuk (E).

Die Gesamtmenge an Versiegelungsgel und weiterem Natur- und/oder Synthesekautschuk (E) beträgt in der Versiegelungsmasse 100 phr.

Für die erfindungsgemäße Versiegelungsmischung werden typischerweise **Weichmacher (F)** in einer Menge eingesetzt, die kleiner als 60 phr ist. Der Weichmacher verdünnt die Matrix bestehend aus Dienelastomeren und Harzen und lässt sie weicher und geschmeidiger werden, damit insbesondere die versiegelnde Wirkung der Versiegelungsmischung in der Kälte, typischerweise bei Temperaturen unter 0 °C, verbessert wird. Der eingesetzte Weichmacher weist typischerweise eine Tg auf, die kleiner als -20 °C und bevorzugt kleiner als -40 °C ist.

Als Weichmacher geeignet sind alle **flüssigen Elastomere oder Schmieröle,** die sowohl aromatisch als auch nicht-aromatisch sein können, und alle flüssigen Stoffe, die für ihre weichmachende Wirkung in Elastomeren bekannt sind, insbesondere in dienhaltigen Elastomeren. Besonders geeignet sind flüssige Elastomere mit einem Mn von 400 bis 90.000 g/mol. Beispiele für Schmieröle sind paraffinische Öle, naphthenische Öle mit niedriger oder hoher Viskosität, hydriert oder nicht-hydriert, aromatische oder DAE (Distillated Aromatic Extracts) Öle, MES (Medium Extracted Solvates) Öle, TDAE (Treated Distillate Aromatic Extracts) Öle, Mineralöle, vegetarische Öle (und ihre Oligomere, z. B. Palmöl, Rapsöl, Sojaöl oder Sonnenblumenöl) und Mischungen der genannten Öle.

Außerdem geeignet sind **Öle** basierend auf Polybuten, insbesondere Polyisobutylen (PIB)-basierte Öle, Weichmacher auf Ether-, Ester-, Phosphat-, Sulfonat-Basis, wobei Ester und Phosphate bevorzugt sind. Bevorzugte Phosphat-Weichmacher sind diejenigen, die 12 bis 30 Kohlenstoffatome besitzen, z. B. Trioctylphosphat. Bevorzugte Ester-Weichmacher sind Stoffe aus der Gruppe enthaltend Trimellitate, Pyromellitate, Phthalate, 1,2-Cyclohexandicarboxylate, Adipate, Azelate, Sebacate, Glyceroltriester und deren Mischungen. Die bevorzugt eingesetzten **Fettsäuren,** synthetisch oder natürlich (im Falle von beispielsweise Sonnenblumenöl oder Rapsöl), sind solche, die mehr als 50 Gew.-%, noch bevorzugter mehr als 80 Gew.-%, Ölsäure enthalten. Von den Triestern sind bevorzugt Glyceroltriester, die überwiegend zu mehr als 50 Gew.-%, bevorzugter mehr als 80 Gew.-%, aus ungesättigten $C_{18}$-Fettsäuren bestehen, z. B. Ölsäure, Linolsäure, Linolensäure und deren Mischungen. Solche **Triester** haben einen hohen Gehalt an Ölsäure und sind in der Literatur beschrieben als Weichmacher für Gummimischungen, die in Reifenlaufflächen verwendet werden, z. B. in US-A-2004/0127617**.**

Anders als bei flüssigen Elastomeren liegt das zahlengemittelte Molekulargewicht (Mn) des flüssigen Weichmachers bevorzugt im Bereich von 400 bis 25.000 g/mol, noch bevorzugter im Bereich von 800 bis 10.000 g/mol (gemessen mittels GPC).

Zusammengefasst werden bevorzugt flüssige Weichmacher aus der Gruppe der flüssigen Elastomere, Polyolefinöle, Naphthenöle, Paraffinöle, DAE-Öle, MES-Öle, TDAE-Öle, Mineralöle, vegetarischen Öle, Weichmacher aus Ethern, Estern, Phosphaten, Sulfonaten und Mischungen der beschriebenen eingesetzt.

Die **Menge an Weichmacher (F)** in erfindungsgemäßen Versiegelungsmassen beträgt typischerweise 0 phr bis 60 phr, bevorzugt 10 phr bis 50 phr, besonders bevorzugt 15 phr bis 40 phr, bezogen auf die Gesamtmenge an Versiegelungsgel und weiterem Natur- und/oder Synthesekautschuk (E).

Die oben beschriebenen erfindungsgemäßen Versiegelungsmassen können optional zusätzliche **Füllstoffe (G)** enthalten. Als Füllstoff versteht man in der vorliegenden Erfindung sowohl verstärkende Füllstoffe (typischerweise Partikel mit einer durchschnittlichen Größe von kleiner als 500 nm, insbesondere im Bereich von 20 nm bis 200 nm) als auch nicht-verstärkende oder inerte Füllstoffe (typischerweise Partikel mit einer durchschnittlichen Größe von mehr als 1 $\mu$m, z. B. im Bereich von 2 $\mu$m bis 200 $\mu$m). Die verstärkenden und nicht-verstärkenden Füllstoffe sollen in der Versiegelungsmasse die Kohäsion verbessern. Dazu zählen:

- Ruße, welche in den erfindungsgemäßen Versiegelungsmassen eingesetzt werden, sind zweckmäßigerweise solche, welche in der Reifenproduktion verwendet werden, beispielsweise Ruße nach ASTM-Standard 300, 600, 700 oder 900 (N326, N330, N347, N375, N683, N772 oder N990), und typischerweise nach dem Flammruß-, Furnace- oder Gasruß-Verfahren hergestellt werden und BET-Oberflächen von 20 $m^2$/g bis 200 $m^2$/g (bestimmt mittels Absorption von CTAB wie in ISO 6810 Standard beschrieben) besitzen, wie z. B. SAF-, ISAF-, IISAF-, HAF-, FEF- oder GPF-Ruße. Alternativ können auch Ruße mit einer Oberfläche von weniger als 20 $m^2$/g eingesetzt werden.

- hochdisperse Kieselsäuren, hergestellt z. B. durch Fällung von Lösungen von Silicaten oder Flammenhydrolyse von Siliciumhalogeniden mit spezifischen Oberflächen von 5 bis 1.000, vorzugsweise 30 $m^2$/g bis 400 $m^2$/g (BET-Oberfläche gemessen nach ISO 5794/1 Standard) und mit Primärteilchengrößen von 5 bis 400 nm. Die Kieselsäuren können gegebenenfalls auch als Mischoxide mit anderen Metalloxiden, wie Al-, Mg-, Ca-, Ba-, Zn- und Ti-Oxiden, vorliegen.

- synthetische Silicate, wie Aluminiumsilicat, Erdalkalisilicate wie Magnesiumsilicat oder Calciumsilicat, mit BET-Oberflächen (gemessen nach ISO 5794/1 Standard) von 20 $m^2$/g bis 400 $m^2$/g und Primärteilchendurchmessern von 10 nm bis 400 nm.

- natürliche Silicate, wie Kaolin und andere natürlich vorkommende Kieselsäuren.

- Metalloxide, wie Zinkoxid, Calciumoxid, Magnesiumoxid, Aluminiumoxid.

- Metallcarbonate, wie Magnesiumcarbonat, Calciumcarbonat, Zinkcarbonat.

- Metallsulfate, wie Calciumsulfat, Bariumsulfat.

- Metallhydroxide, wie Aluminiumhydroxid und Magnesiumhydroxid.

- färbende Füllstoffe oder farbige Füllstoffe, wie Pigmente.

- Kautschukgele auf Basis Polychloropren, NBR und/oder Polybutadien mit Teilchengrößen von 5 nm bis 1.000 nm.

Die genannten Füllstoffe können alleine oder im Gemisch eingesetzt werden.

Die Füllstoffe liegen in den erfindungsgemäßen Versiegelungsmassen typischerweise in einer Menge von 1 phr bis 50 phr, bevorzugt in einer Menge von 1 phr bis 30 phr und besonders bevorzugt in einer Menge von 1 phr bis 20 phr, bezogen auf die Gesamtmenge an Versiegelungsgel und weiterem Natur- und/oder Synthesekautschuke (E) vor.

Die erfindungsgemäßen Versiegelungsmassen können optional weitere **Kautschukhilfsmittel** enthalten, welche typischerweise in Kautschukmischungen eingesetzt werden, wie beispielsweise ein oder mehrere weitere Vernetzer, Beschleuniger, Wärmestabilisatoren, Lichtschutzmittel, Ozonschutzmittel, Verarbeitungshilfsmittel, Streckmittel, organische Säuren oder Verzögerer.

Die Kautschukhilfsmittel können einzeln oder in Mischungen eingesetzt werden.

Die Kautschukhilfsmittel werden in üblichen Mengen, die sich u.a. nach dem Verwendungszweck richten, eingesetzt. Übliche Mengen sind z. B. Mengen von 0,1 phr bis 50 phr.

In einer bevorzugten Ausführungsform enthält die erfindungsgemäße Versiegelungsmasse

- 45 phr bis 100 phr, bevorzugt 60 phr bis 100 phr, besonders bevorzugt 70 phr bis 100 phr der erfindungsgemäßen Versiegelungsgele, wobei Styrol-Butadien-Dienkautschukgele bevorzugt sind,

- 10 phr bis 60 phr, bevorzugt 20 phr bis 50 phr, besonders bevorzugt 25 phr bis 45 phr zumindest eines Harzes (C),

- 0 phr bis 20 phr, bevorzugt 1 phr bis 10 phr, besonders bevorzugt 1 phr bis 5 phr zumindest eines Alterungsschutzmittels (D),

- 0 phr bis 55 phr, bevorzugt 0 phr bis 40 phr, besonders bevorzugt 0 phr bis 30 phr zumindest eines Natur- und/oder Synthesekautschuks (E),

- 0 phr bis 60 phr, bevorzugt 10 phr bis 50 phr, besonders bevorzugt 15 phr bis 40 phr zumindest eines Weichmachers (F),

- optional 1 phr bis 50 phr, bevorzugt 1 phr bis 30 phr, besonders bevorzugt 1 phr bis 20 phr zumindest eines Füllstoffes (G),

jeweils bezogen auf die Gesamtmenge an Versiegelungsgel und weiterem Natur- und/oder Synthesekautschuke (E).

Die erfindungsgemäße Versiegelungsmasse weist bevorzugt zumindest eine der nachfolgend beschriebenen bevorzugten Eigenschaften auf.

**Die erfindungsgemäße Versiegelungsmasse** weist typischerweise eine **Mooney-Viskosität** (ML1+4@100 °C) von 5 MU bis zu 50 MU auf, bevorzugt 8 MU bis zu 40 MU. Die Bestimmung der Mooney-Viskosität erfolgt nach der Norm Standard ASTM D1646 (1999) und misst das Drehmoment der Probe bei erhöhter Temperatur. Es hat sich bewährt die Versiegelungsmasse vorab zu kalandrieren. Hierzu wird die Versiegelungsmasse an der Walze bei einer Walzentemperatur von T ≤ 60 °C zu einem Walzfell verarbeitet. Die zylinderförmig ausgestanzte Probe wird in die Heizkammer gelegt und es wird bis zur gewünschten Temperatur aufgeheizt. Nach einer Vorwärmzeit von einer Minute dreht der Rotor konstant mit 2 Umdrehungen/Minute und das Drehmoment wird nach vier Minuten gemessen. Die gemessene Mooney-Viskosität (ML 1+4) hat die Einheit "Mooney Unit" (MU, mit 100 MU = 8,3 Nm).

Im **SAFT-Test** weist die erfindungsgemäße Versiegelungsmasse typischerweise eine **Versagenstemperatur** (Shear Adhesion Failure Temperature) von >70 °C, bevorzugt >85 °C, noch bevorzugter >95 °C auf.

Für die erfindungsgemäßen Versiegelungsmassen ist die Strecke im **Rolling Ball Tack Test,** die die Stahlkugel zurücklegt, typischerweise kürzer als 3 cm, noch bevorzugt kürzer als 2 cm, ganz besonders bevorzugt im Bereich von 0,05 cm bis 2,0 cm.

Die Versiegelungsmasse sollte einen möglichst kleinen Einfluss auf den **Rollwiderstand** des Reifens ausüben. Hierzu wird der in der Industrie als Rollwiderstandsindikator etablierte Verlustfaktor tan δ bei 60 °C als Messgröße herangezogen, der durch **dynamisch-mechanische Analyse** (DMA) an einem Rheometer bestimmt wird. Aus der Messung erhält man die temperaturabhängigen Speicher- und Verlustmoduli G' und G". Der temperaturabhängige **tan δ-Wert** ergibt sich aus dem Quotienten von Verlustmodul zu Speichermodul. Der **tan δ-Wert** bei 60 °C und 10 Hz der erfindungsgemäßen Versiegelungsmassen ist typischerweise kleiner als 0,35, bevorzugt kleiner als 0,30 und besonders bevorzugt kleiner als 0,25.

Die Erfindung betrifft weiterhin ein **Verfahren zur Herstellung von Versiegelungsmassen.** Hierbei kann das erfindungsgemäße Versiegelungsgel auch durch Mischen von Latices der Dienkautschukgele (A) und (B), oder (A) und/oder (B) mit Versiegelungsgel (H) und gemeinsame Aufarbeitung hergestellt werden. Bestandteile der Versiegelungsmasse können ebenso durch Mischen der Dienkautschukgel-/Versiegelungsgellatices mit Latices der Naturkautschuke und/oder synthetischen Kautschuke sowie durch Mischen weiterer Versiegelungsmassenbestandteile, bevorzugt in Form ihrer Suspensionen, und gemeinsamer Aufarbeitung hergestellt werden. Hierfür kann die Herstellung der erfindungsgemäßen Versiegelungsmasse in einem Masterbatch erfolgen. Die erfindungsgemäßen Versiegelungsmassen aus mindestens einem Versiegelungsgel und mindestens einem Harz (C) können auf verschiedene Weise hergestellt werden. Beispielsweise ist es möglich, die **festen oder flüssigen Einzelkomponenten zu mischen.** Dafür geeignete Aggregate sind beispielsweise Walzen, Innenmischer oder Mischextruder. In einem ersten Schritt werden die Versiegelungsgele mit mindestens einem Harz (C) bei einer Temperatur (1. Mischungstemperatur), die über der Erweichungstemperatur des Harzes liegt, gemischt. Hierbei ist zu beachten, dass die Temperatur nicht die Solltemperatur des Mischers, sondern die tatsächliche Temperatur der Mischung ist.

Optional können verschiedene Additive zum Masterbatch hinzugefügt werden, z. B. Stabilisatoren, Pigmente, Alterungsschutzmittel, etc. Die Herstellung des Masterbatches kann in einer Compoundieranlage erfolgen, beispielsweise in einem Schaufelmischer, in einer offenen Zweiwalzenmühle, einem Extruder oder jedem anderen Mischwerkzeug, das in der Lage ist, die verschiedenen Komponenten der Versiegelungsmasse ausreichend zu mischen und zu kneten, sodass eine homogene Mischung erhalten werden kann. Es wird bevorzugt ein Schneckenextruder verwendet, mit oder ohne konstanter Schneckenwendel, die große Scherungen in die Mischung einbringen kann.

Das Harz (C) kann in der Anfangsphase vor der Zugabe zu den Versiegelungsgelen, welches fest ist, fest oder flüssig sein. Bei der Vermengung des Harzes (C) mit dem Versiegelungsgel während des Mischens wird eine flüssige Form des Harzes bevorzugt, um ein besseres Durchmischen zu erhalten. Dies wird erzielt durch das Erwärmen des Harzes über die Erweichungstemperatur. Abhängig vom verwendeten Harz ist die Mischungstemperatur typischerweise über 70 °C, bevorzugt über 80 °C, z. B. zwischen 100 °C und 150 °C. Bevorzugt erfolgt die Zudosierung des Harzes (C) in den Mischer unter Druck in Form einer Injektion des flüssigen Harzes unter Ausschluss von Sauerstoff. Dieser Schritt kann kombiniert werden mit dem Mischen bei der 1. Mischungstemperatur.

Weitere Verarbeitungsschritte erfolgen bevorzugt bei einer Temperatur, die unter der Erweichungstemperatur des Harzes (C) liegt, z.B. bei 50 °C (2. Mischungstemperatur).

Ein Beispiel zur Herstellung der Versiegelungsmasse als Masterbatch in einem Schneckenextruder sieht wie folgt aus:

Es wird ein Einschneckenextruder verwendet, der eine 1. Dosierung für die Mischungsbestandteile besitzt und eine 2. Dosierung (Dosierpumpe) für das verflüssigte Harz (C). Die Mischung erfolgt durch die Rotation der Schnecke, wobei die Mischkomponenten hohe Scherungen erfahren. Die Mischung gelangt anschließend zum Homogenisator mit einem Zerhacker-Werkzeug. Nach dieser Zone wird schließlich der Masterbatch in der gewünschten Form durch einen Einfachextrusionskopf extrudiert. Die erhaltene Versiegelungsmischung wird beispielsweise zwischen zwei siliconbeschichteten Folien verpackt, abgekühlt und ist gebrauchsfertig. Das Extrudat kann auch zuvor zu einer Zweirollenwalze geführt werden, um in diesem Schritt ggf. auch weitere Mischzutaten (Pigmente, Füllstoffe etc.) zudosieren. Die Zudosierung kann kontinuierlich sein. Die Temperatur der Walze ist bevorzugt unter 100 °C. Die Verpackung der Versiegelungsmischung erfolgt analog. Es ist möglich diese Versiegelungsmischung unter industriellen Bedingungen herzustellen, ohne das Risiko einer Kontamination/Verunreinigung der Werkzeuge, z. B. durch Kleben der Versiegelungsmasse an der Walze, einzugehen.

Das **Aufbringen der Versiegelungsschicht** auf den Reifen kann nach der Vulkanisation des Reifens erfolgen. Typische Methoden zur Aufbringung der Versiegelungsschicht sind beispielsweise in US-A-5,295,525 beschrieben. Die auf Dienkautschukgelen basierenden Versiegelungsmassen können in einem kontinuierlichen Verfahren beispielsweise auf die Reifenseele aufgetragen werden, ohne dass sie einer Vulkanisation unterworfen werden müssen. Die Versiegelungsmasse kann beispielsweise als Versiegelungsschicht oder streifen auf die Innenseite des Reifens extrudiert werden. In einer alternativen Ausführungsform kann der Versiegelungsmasse als Streifen vorbereitet werden, welcher dann auf die Innenseite des Reifens geklebt wird.

In einer weiteren alternativen Ausführungsform kann die Versiegelungsmasse als Lösungsmittel-Zement vorbereitet werden, welcher beispielsweise auf die Innenseite des Reifens gesprüht wird. Eine weitere alternative Aufbringungsweise als Laminat ist in US-A-4,913,209 beschrieben.

Die Erfindung betrifft daher weiterhin die **Verwendung** der **Versiegelungsgele** in Versiegelungsmassen, insbesondere zur Verbesserung der Adhäsions- und Kohäsionseigenschaften.

Darüber hinaus betrifft die Erfindung die **Verwendung von versiegelungsgelhaltigen Versiegelungsmassen** als Versiegelungsschicht in Reifen, bevorzugt auf Innerlinern von Fahrzeugluftreifen.

Gegenstand der Erfindung ist somit weiterhin ein **Fahrzeugluftreifen** mit einer erfindungsgemäßen versiegelungsgelhaltigen Versiegelungsmasse.

Außerdem betrifft die Erfindung die Verwendung der Versiegelungsgele in Versiegelungsmassen für Versiegelungen von Hohlkörpern und Membranen.

Der Vorteil der Erfindung liegt insbesondere in den exzellenten Kohäsions- und Adhäsionseigenschaften sowie im niedrigen Rollwiderstand der Versiegelungsmasse.

Die folgenden Beispiele beschreiben die Erfindung, ohne sie jedoch einzuschränken.

**Beispiele:**

In den nachfolgenden Beispielen werden die folgenden Substanzen eingesetzt:

| Name | Bezugsquelle |
| --- | --- |
| Styrol (ST) | Azelis |
| Butadien-1,3 unstabilisiert (BDN) | Air Liquide Deutschland GmbH |
| tert-Dodecylmercaptan (tDDM) | Phillips |
| Dresinate 835 (Abieta™ DRS 835) (Emulgator) | Arizona Chemical B.K. |
| Ölsäure | Merck KGaA |
| Trimethylolpropantrimethylacrylat (TMPTMA) | Sigma-Aldrich Chemie GmbH |
| Divinylbenzol (DVB) | Sigma-Aldrich Chemie GmbH |

(fortgesetzt)

| Name | Bezugsquelle |
|---|---|
| Kaliumhydroxid KOH | Riedel-de-Haen |
| Kaliumchlorid KCl | Riedel-de-Haen |
| p-Menthanhydroperoxid (Trigonox® NT 50) | Akzo-Degussa |
| Natriumphosphat Dodecahydrat $Na_3PO_4 * 12 H_2O$ (z. A. ) | Merck KGaA |
| Rongalit® C (z. Synth.) | Merck KGaA |
| Etyhlendiamintetraessigsäure EDTA (reinst) | Merck KGaA |
| Eisen(II)sulfat Heptahydrat $FeSO_4 * 7 H_2O$ (z. A.) | Merck KGaA |
| Natriumchlorid NaCl | Merck KGaA |
| Phosphorsäure $H_3PO_4$ | VWR |
| Calciumchlorid wasserfrei | Merck KGaA |
| E-SBR Buna SE 1502 H (Kautschuk) | LANXESS Deutschland GmbH |
| Escorez™ 2173 (Harz) | ExxonMobil Chemical |
| TDAE-Öl Vivatec® 500 (Weichmacher) | LANXESS Deutschland GmbH |
| Vulkanox® HS LG (Alterungsschutzmittel) | LANXESS Deutschland GmbH |
| Vulkanox® MB2/MG-C (Alterungsschutzmittel) | LANXESS Deutschland GmbH |
| Radglo® GM-25 (Pigment) | Radiant Color N.V. |

**Messmethoden:**

**CHARKTERISIERUNG DER DIENKAUTSCHUK- UND VERSIEGELUNGSGELE**

**Umsatzbestimmung:** Der **Umsatz der kalten Emulsionspolymerisation** wird berechnet aus dem Feststoffgehalt der Latexlösung. Die Feststoffbestimmung im Latex erfolgt mittels eines Halogen-Feuchtigkeitsmessgerätes (Mettler Toledo, Halogen Moisture Analyzer HG63). Hierzu wird eine Aluminiumschale (Mettler, Artikel-Nr. 13865) in den Probenhalter eingesetzt und tariert. Dann wird ein Glasfaserfilter HAF1 (Mettler, Artikel-Nr. 214464) aufgelegt und die Messung gestartet. Üblicherweise nimmt der Glasfaserfilter bei der Lagerung ca. 0,5 % Luftfeuchtigkeit auf. Anschließend wird die Aluminiumschale mit getrocknetem Glasfaserfilter in den Probenhalter eingesetzt und die Waage tariert. Es werden ca. 1 g bis 1,5 g Latex eingewogen und möglichst großflächig verteilt, um eine vollständige Aufnahme der Flüssigkeit durch den Glasfaserfilter zu ermöglichen. Dann wird die Messung gestartet. Wenn der Gewichtsverlust der Probe weniger als 1 mg pro 50 Sekunden beträgt, wird die Messung beendet und der Feststoffgehalt wird notiert. Aus dem gemessenem Feststoffgehalt des Latex und dem theoretischen Feststoffgehalt des Latex zum Ende der Polymerisation wird der Umsatz der Emulsionspolymerisation berechnet.

**Gelgehaltsbestimmung:** Der in Toluol unlösliche Anteil wird in Toluol bei 23 °C bestimmt. Hierbei werden 250 mg des Dienkautschukgels in 20 ml Toluol 24 Stunden unter Schütteln bei 23 °C gequollen. Nach Zentrifugation mit 20.000 UpM wird der unlösliche Anteil abgetrennt und getrocknet. Der Gelgehalt ergibt sich aus dem Quotienten des getrockneten Rückstands und der Einwaage und wird in Prozent angegeben.

**Glasübergangstemperatur:** Die Bestimmung der **Glasübergangstemperaturen (Tg)** und der **Breite des Glasübergangs (ΔTg)** der Dienkautschukgele erfolgt durch Differentialthermoanalyse (DTA, engl. Differential-Scanning-Calorimetry (DSC)) an einem Kalorimeter DSC-7 der Firma Perkin-Elmer Baujahr 2003. Für die Bestimmung von Tg und ΔTg werden zwei Abkühl-/Aufheizzyklen durchgeführt. Tg und ΔTg werden im zweiten Aufheizzyklus bestimmt. Für die Bestimmungen werden 10 mg bis 12 mg des Dienkautschukgels in einem DSC-Probenbehälter (Standard-Aluminium-Pfanne) von Perkin-Elmer eingesetzt. Der erste DSC-Zyklus wird durchgeführt, indem die Probe zuerst mit flüssigem Stickstoff auf -100 °C abgekühlt und dann mit einer Geschwindigkeit von 20 K/min auf +150 °C aufgeheizt wird. Der zweite DSC-Zyklus wird durch sofortige Abkühlung der Probe begonnen, sobald eine Probentemperatur von +150 °C erreicht ist. Die Abkühlung erfolgt mit einer Geschwindigkeit von ungefähr 320 K/min. Im zweiten Aufheizzyklus wird die Probe wie im ersten Zyklus noch einmal auf +150 °C aufgeheizt. Die Aufheizgeschwindigkeit im zweiten Zyklus ist erneut 20 K/min. Tg und ΔTg werden graphisch an der DSC-Kurve des zweiten Aufheizvorgangs bestimmt. Für diesen Zweck werden an die DSC-Kurve drei Geraden angelegt. Die 1.Gerade wird am Kurventeil der DSC-Kurve unterhalb Tg, die 2.Gerade an dem durch Tg verlaufenden Kurvenast mit Wendepunkt und die 3.Gerade an dem Kurvenast der DSC-Kurve oberhalb Tg angelegt. Auf diese Weise werden drei Geraden mit zwei Schnittpunkten erhalten. Beide Schnittpunkte sind jeweils durch eine charakteristische Temperatur gekennzeichnet. Die Glastemperatur Tg erhält man als Mittelwert dieser beiden Temperaturen und die Breite des Glasübergangs ΔTg erhält man aus der Differenz der beiden Temperaturen.

Zur Ermittlung des **Quellungsindex** lässt man 250 mg des Dienkautschukgels in 25 ml Toluol bei 23 °C für 24 h unter Schütteln quellen. Das Gel wird mit 20.000 UpM abzentrifugiert, gewogen und anschließend bei 70 °C bis zur Gewichtskonstanz getrocknet und nochmals gewogen. Der Quellungsindex wird wie folgt berechnet:

Qi = Nassgewicht des Gels /Trockengewicht des Gels.

Die Bestimmung der **Mooney-Viskosität der Dienkautschukgele und der Versiegelungsgele** erfolgt nach der Norm Standard ASTM D1646 (1999) und misst das Drehmoment der Probe bei erhöhter Temperatur gemessen an einem Mooney-Viskosimeter MV 2000 der Firma Alpha Technologies Baujahr 1999 (Hersteller Serien-Nr.: 25AIH2753). Es hat sich bewährt das Dienkautschukgel bzw. das Versiegelungsgel vorab zu kalandrieren. Hierzu wird das Dienkautschukgel bzw. das Versiegelungsgel an der Walze bei einer Walzentemperatur von T ≤ 60 °C zu einem Walzfell verarbeitet. Der Walzspalt wird variiert zwischen 1 mm und 3 mm, die Friktion beträgt -10% und die Umdrehungen der Walze pro Minute betragen 7-8 UpM. Die Messung wird wie folgt durchgeführt: Die zylinderförmig ausgestanzte Probe wird in die Heizkammer gelegt und es wird bis zur gewünschten Temperatur aufgeheizt (hier 100 °C). Nach einer Vorwärmzeit von einer Minute dreht der Rotor (Größe L) konstant mit 2 Umdrehungen/Minute und das Drehmoment wird nach vier Minuten gemessen. Die gemessene Mooney-Viskosität (ML 1+4) hat die Einheit "Mooney Unit" (MU, mit 100 MU = 8,3 Nm).

## CHARAKTERISIERUNG DER VERSIEGELUNGSMASSE

Die **Klebrigkeit** (Messgröße für die Adhäsion) der erfindungsgemäßen Versiegelungsmasse wird mittels eines **Rolling Ball Tack Testers** bestimmt.

Der Test wird in Anlehnung an die Norm ASTM D3121-06 bei einer Temperatur von 7 °C durchgeführt. Die Versiegelungsmasse wird für 10 min bei 105 °C und 120 bar auf 1 mm Dicke gepresst und über einen Zeitraum von 12 h auf Raumtemperatur unter Druck abgekühlt. Die so gepresste Versiegelungsmasse wird auf ein Rechteck der Kantenlänge 20 cm x 10 cm zugeschnitten, wobei auf eine glatte und verunreinigungsfreie Oberfläche zu achten ist. Die 1 mm dicke, rechteckige Versiegelungsmasse wird auf eine ebene Fläche gelegt und der Rolling Ball Tack Tester so auf den rechteckigen Versiegelungsfilm aufgestellt, dass der Tester ebenfalls eben steht (Kontrolle über Wasserwaage) und eine Kugelrollstrecke von ≥ 6 cm möglich ist. Die polierte Stahlkugel mit einem Durchmesser von 1 cm (ChemInstruments) wird vor jedem Test in Aceton gereinigt und anschließend auf den Rolling Ball Tack Tester gesetzt. Hierbei ist eine Oberflächenverunreinigung der Kugel zu vermeiden, die z. B. durch direkte Handberührung hervorgerufen werden kann. Durch Betätigung des Auslösemechanismus des Rolling Ball Tack Testers wird die Kugel kontrolliert in Bewegung gebracht. Die Strecke, die die Kugel auf dem Testmaterial gerollt ist, wird gemessen. Dabei wird vom Ende des Rolling Ball Testers bis zur Mitte der Kugel gemessen. Jeder Versuch wird auf einer verunreinigungsfreien Oberfläche durchgeführt. Der Versuch wird mindestens dreimal wiederholt und der Durchschnitt als Ergebnis angegeben.

Zur Bestimmung der **Versagenstemperatur** (Messgröße für die Kohäsion) wird der **SAFT-Test** (Shear Adhesion Failure Temperature) in Anlehnung an die Norm ASTM D4498-07 (dort Heat Fail Temperature genannt) durchgeführt. Hierzu wird die Versiegelungsmasse für 10 min bei 105 °C und 120 bar auf 1 mm Dicke gepresst und über einen Zeitraum von 12 h auf Raumtemperatur unter Druck abgekühlt. Die gepresste und auf eine Kantenlänge von 2,5 cm x 2,5 cm zugeschnittene Versiegelungsmasse wird mittig zwischen zwei mit Aceton vorgereinigten polierten Edelstahlplatten mit den Maßen 7,5 cm x 7,5 cm x 2,5 cm positioniert, sodass sich zwischen den beiden Platten eine quadratische Probengeometrie mit den Maßen 2,5 cm x 2,5 cm x 0,1 cm ergibt. Die Edelstahlplatten der Firma ChemInstruments weisen am Plattenende jeweils ein Loch auf. Die Versiegelungsmasse zwischen den beiden Edelstahlplatten wird bei Raumtemperatur für 3 min bei 5,4 bar mit den Edelstahlplatten verpresst, um einen Haftverbund zwischen Edelstahlplatte und Versiegelungsmasse herzustellen. Anschließend wird die Haftverbundkonstruktion in ein Scherprüfgerät eingehängt (ChemInstruments SS-HT-8). Es ist darauf zu achten, dass die Edelstahlplatten samt Versiegelungsmasse senkrecht hängen. An das nach unten zeigende Plattenloch wird ein 500 g schweres Gewicht gehängt. Die Temperatur des Scherprüfofens (Memmert, UF 110 Plus) wird für eine Stunde auf Raumtemperatur belassen. Anschließend wird die Zeitmessung gestartet und innerhalb von 10 min die Temperatur linear auf 40 °C erhöht und diese für 20 min konstant gehalten, bevor der Ofen mit einer Heizrate von 0,5 °C/min auf 175 °C aufgeheizt und für maximal 4 Stunden konstant gehalten wird. Es wird die Temperatur und die Zeit notiert, bei der die Haftkonstruktion versagt und das Gewicht herunterfällt.

Die Bestimmung des **Verlustfaktors tan δ bei 60 °C** als Indikator für den Rollwiderstand erfolgt in Anlehnung an die Norm DIN-ISO 6721-1 und 6721-2. Die Präparation der Versiegelungsmasse für die Messung des Verlustfaktors als Indikator für den Rollwiderstand wird wie folgt durchgeführt: Die Versieglungsmasse wird an der Walze bei einer Walzentemperatur von T ≥ 60 °C zu einem Walzfell verarbeitet. Das Fell wird anschließend durch einen Walzspalt von 0,5 mm durchgelassen, woraus sich ein Fell mit einer Dicke ≤ 3,5 mm ergibt. Von diesem Fell wird eine 10 cm x 10 cm große Probe entnommen und in einer Form von 10 cm x 10 cm x 0,1 cm bei einem Druck von 120 bar und einer Temperatur T ≥ 105 °C für 10 min gepresst. Nach Abkühlung auf Raumtemperatur innerhalb von 10 Minuten wird eine runde Probe mit einem Durchmesser von 8 mm aus dem gepressten Material für dynamisch-mechanische Messungen ausgestanzt. Diese Probe wird zwischen zwei Platten fixiert. Vor dem Temperaturdurchlauf wird an der Probe ein Zeitdurchlauf für die Dauer von 10 min bei 100 °C und einer Vorkraft von 2 N durchgeführt. Anschließend wird ein Temperaturdurchlauf mit einer Vorkraft von 2 N und maximaler Deformation von 2 % im Bereich von -100 °C bis 170 °C bei einer konstanten Frequenz von 10 Hz und einer Heizrate von 3 K/min durchgeführt.

**Herstellung und Charakterisierung der Dienkautschukgele und Versiegelungsgele**

Nachfolgend wird die Herstellung der **erfindungsgemäßen kaltpolymerisierten Dienkautschukgele (A)** (A1 bis A3), **(B)** (B1 bis B3) und des **Versiegelungsgels (H)** (H1 bis H3) beschrieben, wobei die Dienkautschukgele A1, B2 und das Versiegelungsgel H3 in den weiteren Beispielen verwendet wurden. Außerdem wird die Herstellung von nicht-**erfindungsgemäßen warmpolymerisierten Vergleichsbeispielen W1 und W2** sowie **des nicht-erfindungsgemäßen Versiegelungsgels N1** beschrieben.

Die Dienkautschukgele A1 bis A3 und B1 bis B3 sowie die Versiegelungsgele H1 bis H3 werden durch Emulsionspolymerisation hergestellt, wobei 1,3-Butadien (BDN) und Styrol (ST) als Monomere und Trimethylolpropantrimethacrylat (TMPTMA) und/oder Divinylbenzol (DVB) als Vernetzer eingesetzt werden. Die für die Herstellung der Dienkautschukgele (A), (B) und (W) sowie die Versiegelungsgele (H) verwendeten Monomere und wesentlichen Rezepturbestandteile sind in folgender Tabelle zusammengefasst:

Tabelle 1a:

| Dienkautschukgel | Lösungsmittel | Emulgatoren | | Monomere | | Vernetzer | |
|---|---|---|---|---|---|---|---|
| | Wasser [g] | Ölsäure [g] | Dresinate [g] | BDN [g] | ST [g] | TMPTMA [g] | DVB [g] |
| A1 | 11939 | 80 | 171 | 3492 | 400 | 112,5 | -- |
| A2 | 11939 | 80 | 171 | 3516 | 400 | 87,5 | -- |
| A3 | 11939 | 80 | 171 | 3528 | 400 | 75,0 | -- |
| B1 | 11939 | 80 | 171 | 3540 | 400 | -- | 75,0 |
| B2 | 11939 | 80 | 171 | 3528 | 400 | -- | 90,0 |
| B3 | 11939 | 80 | 171 | 3128 | 800 | -- | 90 |
| W1 | 11939 | 80 | 171 | 3528 | 400 | 75 | -- |
| W2 | 11939 | 80 | 171 | 3540 | 400 | -- | 75 |

Tabelle 1b:

| Versiegelungsgel | Lösungsmittel | Emulgatoren | | Monomere | | Vernetzer | |
|---|---|---|---|---|---|---|---|
| | Wasser [g] | Ölsäure [g] | Dresinate [g] | BDN [g] | ST [g] | TMPTMA [g] | DVB [g] |
| H1 | 11939 | 80 | 171 | 3528 | 400 | 62,5 | 15 |
| H2 | 11939 | 80 | 171 | 3516 | 400 | 62,5 | 30 |
| H3 | 11939 | 80 | 171 | 3504 | 400 | 62,5 | 45 |

(a) Emulsionspolymerisation und Vernetzung des SBR-Kautschuks

**Beispiele A1 bis A3, B1 bis B3 und H1 bis H3:**

Die Angaben beziehen sich auf 100 % reine Einsatzstoffe. Die Herstellung der Dienkautschukgele erfolgte in einem 20 L-Autoklaven mit Rührwerk. Monomere, Vernetzer, Emulgatoren sowie die in der Tabelle angegebenen Wassermengen (abzüglich der für die Herstellung der wässrigen Prämix- und Initiatorlösungen benötigten Wassermengen) wurden im Autoklaven vorgelegt.

Nach Temperierung der Reaktionsmischung auf 10 °C wurde frisch hergestellte, wässrige Prämixlösung (4 %ig) zur Aktivierung des Initiators in den Autoklaven gegeben. Diese Prämixlösungen bestanden aus 1,10 g Ethylendiamintetraessigsäure, 0,86 g Eisen(II)-sulfat * 7 $H_2O$ (ohne Kristallwasser berechnet) sowie 2,07 g Rongalit® C (Natriumformaldehydsulfoxylat-2-hydrat, ohne Kristallwasser berechnet). Es wurde zunächst die Hälfte der Lösung zugegeben. Zur Initiierung wurden in den Reaktor außerdem 0,058 Gew.-% (wiederrum bezogen auf die Summe aller Monomere) p-Menthanhydroperoxid (Trigonox® NT 50 der Akzo-Degussa) dosiert, die in 200 mL der im Reaktor hergestellten Emulgatorlösung emulgiert wurden. Bei Erreichen von 30 % Umsatz wurden die restlichen 50 % der Prämixlösung zudosiert.

Die Temperaturführung während der Polymerisation erfolgte durch Einstellung von Kühlmittelmenge und Kühlmitteltemperatur auf 10 ± 0,5 °C.

Bei Erreichen eines Polymerisationsumsatzes von mehr als 85 % (üblicherweise: 90 % bis 100 %) wurde die Polymerisation durch Zugabe einer wässrigen Lösung von 2,35 g Diethylhydroxylamin abgestoppt. Zur Entfernung flüchtiger Bestandteile aus dem Latex wurde der Latex mit Wasserdampf gestrippt.

**Vergleichsbeispiele W1 und W2:**

**Nicht-erfindungsgemäße Dienkautschukgele** wurden mittels **warmer** Emulsionspolymerisationen hergestellt. Die Herstellung von **W1** und **W2** wurde jeweils wie die kalte Emulsionspolymerisation durchgeführt, jedoch bei einer Polymerisationstemperatur von **50 °C.**

(b) Aufarbeitung der Dienkautschukgele

Die Fällung des Dienkautschukgels wurde wie folgt durchgeführt:

In einen 15 L Edelstahltopf ausgestattet mit einem Dissolverrührer wurden 3 kg des Latex unter Rührung vorgelegt und auf 60 °C erhitzt. Nun erfolgte die Zugabe von 1 kg einer 20 %igen NaCl-Lösung (333 g/kg Latex), wobei ein sehr feines Koagulat entstand. Anschließend wurde die Suspension auf 75 °C erhitzt und langsam 25 %ige Phosphorsäure zugetropft. Hierbei war es wichtig, dass der Dissolverrührer mit maximaler Rührgeschwindigkeit (1500 U/min) lief, da das Koagulat sonst leicht zu einer großen Kugel verklebte. Im neutralen pH-Bereich bildete die Suspension einen Schaum der im sauren Bereich vollständig verschwand. Die Fällung war vollständig und das Serum farblos klar.

Nun wurde das Koagulat über ein 200 $\mu$m Tuch filtriert und anschließend mit VE-Wasser neutral gewaschen. Hierzu reichten zwei Waschgänge aus.

Anschließend wurde das Polymer im Vakuumtrockenschrank bei 55 °C bis zu einer Restfeuchte von ≤ 0,5 % getrocknet.

Die analytischen Daten, bestimmt nach den oben beschriebenen Methoden, gibt folgende Tabelle 2 wieder.

Tabelle 2:

|  | Umsatz [%] | Durchmesser Primärpartikel [nm] | Gelgehalt [%] | Quellungsindex QI | Tg [°C] | ΔTg [°C] | (ML1+4) @100 °C [MU] |
|---|---|---|---|---|---|---|---|
| A1 | 93 | 42 | 88 | 24 | -70 | 7 | 183 |
| A2 | 87 | 38 | 83 | 29 | -71 | 7 | 187 |
| A3 | 87 | 39 | 77 | 34 | -71 | 6 | 188 |
| B1 | 88 | 39 | 86 | 12 | -69 | 6 | 87 |
| B2 | 92 | 41 | 94 | 12 | -69 | 6 | 77 |

(fortgesetzt)

| | Umsatz [%] | Durchmesser Primärpartikel [nm] | Gelgehalt [%] | Quellungsindex QI | Tg [°C] | ∆Tg [°C] | (ML1+4) @100 °C [MU] |
|---|---|---|---|---|---|---|---|
| B3 | 92 | 44 | 93 | 9 | -58 | 8 | 84 |
| H1 | 92 | 36 | 88 | 32 | -71 | 6 | 123 |
| H2 | 92 | 34 | 93 | 15 | -70 | 7 | 129 |
| H3 | 92 | 39 | 92 | 12 | -69 | 7 | 124 |
| W1 | 97 | 36 | 17 | 15 | -71 | 6 | 74 |
| W2 | 97 | 39 | 44 | 9 | -71 | 6 | 61 |

Die in Tabelle 2 dargestellten kaltpolymerisierten Dienkautschukgele (A) und (B) weisen bei einem Umsatz von mehr als 85 % einen Gelgehalt von mehr als 75 % und eine Mooney-Viskosität (ML1+4@100 °C) von mehr als 75 MU auf.

Die in Tabelle 2 dargestellten kaltpolymerisierten Versiegelungsgele (H) weisen bei einem Umsatz von mehr als 85 % einen Gelgehalt von mehr als 75 % und eine Mooney-Viskosität (ML1+4@100 °C) von mehr als 100 MU auf.

Erfindungsgemäße kaltpolymerisierte Dienkautschukgele unterscheiden sich von den nicht-erfindungsgemäßen warmpolymerisierten Dienkautschukgelen in der Mikrostruktur. Ein Vergleich der Mikrostruktur der erfindungsgemäßen kaltpolymerisierten Dienkautschukgele A1 und B2 und der Versiegelungsgele H1 und H2 mit den entsprechenden nicht-erfindungsgemäßen warmpolymerisierten Dienkautschukgelen W1 und W2, die durch eine warme Emulsionspolymerisation hergestellt wurden, ist in der folgenden Tabelle 3 zusammengefasst. Die Messungen wurden an dem Gerät Nicolet FTIR Nexus der Firma Thermoscientific, Baujahr 1999 durchgeführt.

Tabelle 3:

| Dienkautschukgel | cis [Gew.-%] | trans [Gew.-%] | vinyl [Gew.-%] |
|---|---|---|---|
| A1 | 13,9 | 66,3 | 19,8 |
| W1 | 21,7 | 57,1 | 21,2 |
| B2 | 14,9 | 64,8 | 20,3 |
| W2 | 22,2 | 55,7 | 22,1 |
| H1 | 14,4 | 65,3 | 20,2 |
| H2 | 14,5 | 65,4 | 20,1 |

Erfindungsgemäße kaltpolymerisierte Dienkautschukgele (A) und (B) weisen einen Anteil an cis-1,4-Butadien-Einheiten von 8 Gew.-% bis 17 Gew.-%, einen Anteil an trans-1,4-Butadien-Einheiten von 59 Gew.-% bis 75 Gew.-% und einen Anteil an 1,2-Vinyl-Butadien-Einheiten von 17 Gew.-% bis 21 Gew.-% bezogen auf eingebautes 1,3-Butadien auf.

Erfindungsgemäße kaltpolymerisierte Versiegelungsgele (H) weisen einen Anteil an cis-1,4-Butadien-Einheiten von 8 Gew,-% bis 17 Gew.-%, einen Anteil an trans-1,4-Butadien-Einheiten von 59 Gew.-% bis 75 Gew.-% und einen Anteil an 1,2-Vinyl-Butadien-Einheiten von 17 Gew.-% bis 21 Gew.-% bezogen auf eingebautes 1,3-Butadien auf.

**Herstellung und Charakterisierung erfindungsgemäßer Versiegelungsgele M1 bis M6 sowie des nicht-erfindungsgemäßen Versiegelungsgels N**

Die Herstellung der Versiegelungsgele M1 bis M6 und N1 auf Basis von A1, B2, H3 und W1 erfolgte auf einer Walzenmühle W 150 G der Firma Collin Baujahr 04/2013. Die Temperatur der Walze betrug während des Mischvorganges ≤ 60 °C. Der Walzenspalt wurde variiert zwischen 1 mm und 3 mm, die Friktion betrug -10 % und die Umdrehungen der Walze pro Minute betrug 7 UpM bis 8 UpM.

Die Zusammensetzungen der erfindungsgemäßen Versiegelungsgele (M) und des nicht-erfindungsgemäßen Versiegelungsgels (N) sind in der folgenden Tabelle 4 angegeben. Die Bestimmung der Mooney-Viskosität wurde nach der oben beschriebenen Methode von einem Walzfell an einem Mooney-Viskosimeter MV 2000 der Firma Alpha Technologies bestimmt. Die Mengen der einzelnen Komponenten sind in Gew.-% angegeben. Durch Variation der Zusammensetzung der Dienkautschukgele lässt sich die Mooney-Viskosität des Versiegelungsgels steuern.

Tabelle 4:

| Versiegelungsgel | A1 [Gew.-%] | B2 [Gew.-%] | H3 [Gew.-%] | W1 [Gew.-%] | (ML1+4) @ 100 °C [MU] |
|---|---|---|---|---|---|
| M1 | 70 | 30 | 0 | 0 | 168 |
| M2 | 50 | 50 | 0 | 0 | 125 |
| M3 | 30 | 70 | 0 | 0 | 103 |
| M4 | 20 | 80 | 0 | 0 | 104 |
| M5 | 0 | 0 | 100 | 0 | 124 |
| M6 | 20 | 0 | 80 | 0 | 108 |
| N1 | 0 | 50 | 0 | 50 | 73 |

**Herstellung und Charakterisierung der nicht-erfindungsgemäßen Versiegelungsmassen VV1 und VV2 sowie der erfindungsgemäßen Versiegelungsmassen V1 bis V6**

Die Versiegelungsmasse wurde auf einer Walzenmühle W 150 G der Firma Collin Baujahr 04/2013 hergestellt. Die Temperatur der Walze betrug während des Mischvorganges 90 °C. Der Walzenspalt wurde variiert zwischen 1 mm und 3 mm, die Friktion betrug -10% und die Umdrehungen der Walze pro Minute betrug 7 UpM bis 8 UpM.

Für die Herstellung der erfindungsgemäßen Versiegelungsmassen V1 bis V4 und V6 wurden die **Dienkautschukgele A1, B2 und H3** zuerst wie oben beschrieben auf der Walze jeweils homogen zu den **Versiegelungsgelen M1 bis M4 und M6** miteinander gemischt. Anschließend wurde jeweils Kautschuk (E) hinzugegeben und gut dispergiert. Danach wurde Harz (C) nach und nach in kleinen Portionen hinzugegeben, gefolgt von den Alterungsschutzmitteln (D), dem Pigment (G) und als letztes dem Weichmacher (F). Für die Herstellung der erfindungsgemäßen Versiegelungsmasse V5 wurde das Versiegelungsgel H3 auf der Walze mit dem Kautschuk (E) auf der Walze homogen miteinander gemischt und anschließend Harz (C) nach und nach in kleinen Portionen hinzugegeben, gefolgt von den Alterungsschutzmitteln (D), dem Pigment (G) und als letztes dem Weichmacher (F). Es wurde solange gewalzt bis die Mischung visuell homogen erschien.

Die **Zusammensetzung** der nicht-erfindungsgemäßen Versiegelungsmassen VV1 und VV2 sowie der erfindungsgemäßen Versiegelungsmassen V1 bis V6 sowie deren Mengen sind in Tabelle 5 angegeben. Die Mengen der einzelnen Komponenten sind in phr angegeben.

Tabelle 5:

| Versiegelungsmasse | VV 1 | VV 2 | V1 | V2 | V3 | V4 | V5 | V6 |
|---|---|---|---|---|---|---|---|---|
| Dienkautschukgel A1 [phr] | 80 | 0 | 56 | 40 | 24 | 16 | 0 | 16 |
| Dienkautschukgel B2 [phr] | 0 | 80 | 24 | 40 | 56 | 64 | 0 | 0 |
| Versiegelungsgel H3 [phr] | 0 | 0 | 0 | 0 | 0 | 0 | 80 | 64 |
| Harz (C) Escorez 2173 [phr] | 40 | 40 | 40 | 40 | 40 | 40 | 40 | 40 |
| Alterungsschutzmittel (D) Vulkanox HS LG [phr] | 1,5 | 1,5 | 1,5 | 1,5 | 1,5 | 1,5 | 1,5 | 1,5 |
| Alterungsschutzmittel (D) Vulkanox MB2/MG-C [phr] | 1,5 | 1,5 | 1,5 | 1,5 | 1,5 | 1,5 | 1,5 | 1,5 |
| Kautschuk (E) Buna SE 1502H [phr] | 20 | 20 | 20 | 20 | 20 | 20 | 20 | 20 |
| Weichmacher (F) TDAE-Öl Vivatec 500 [phr] | 40 | 40 | 40 | 40 | 40 | 40 | 40 | 40 |
| Pigment (G) Radglo GM-25 [phr] | 1 | 1 | 1 | 1 | 1 | 1 | 1 | 1 |

Die **Charakterisierung** der Versiegelungsmassen VV1, VV2 sowie V1 bis V6 ist in der folgenden Tabelle 6 zusammengefasst.

Tabelle 6:

| Versiegelungsmasse | VV1 | VV2 | V1 | V2 | V3 | V4 | V5 | V6 |
|---|---|---|---|---|---|---|---|---|
| (ML1+4)@100°C[MU] | 21 | 11 | 16 | 15 | 13 | 13 | 15 | 13 |
| Rolling Ball Tack Tester [cm] | 4,78 | 1,13 | 2,70 | 2,53 | 1,90 | 1,10 | 2,66 | 1,32 |
| tan δ @ 60 °C | 0,21 | 0,21 | 0,19 | 0,18 | 0,20 | 0,18 | 0,19 | 0,19 |

Die Mooney-Viskosität wird bestimmt nach den oben beschriebenen Methoden an einem Mooney-Viskosimeter MV 2000 der Firma Alpha Technologies

Die **Klebrigkeit** wird bestimmt nach den oben beschriebenen Methoden an einem **Rolling Ball Tack Tester** (RBT-100) der Firma ChemInstruments.

Der **tan δ Wert** wird bestimmt nach den oben beschriebenen Methoden mittel ARES-G2 Rheometer der Firma TA Instruments.

Die **Bestimmung der Versagenstemperatur** der jeweiligen Versiegelungsmasse mittels **SAFT-Test** erfolgte doppelt an zwei Probenkörper der jeweiligen Versiegelungsmasse. Die Messungen wurden nach den oben beschriebenen Methoden an einem Shear Tester HT-8 der Firma ChemInstruments in einem Wärmeschrank UF 110 Plus der Firma Memmert durchgeführt. Die Mittelwerte der Ergebnisse sind in der folgenden Tabelle 7 zusammengefasst.

Tabelle 7:

| Versiegelungsmasse | VV1 | VV2 | V1 | V2 | V3 | V4 | V5 | V6 |
|---|---|---|---|---|---|---|---|---|
| Versagenstemperatur [°C] | 117 | 66 | 101 | 108 | 103 | 195 | 198 | 76 |

Eine in der Praxis **einsatzfähige Versiegelungsmasse** muss sowohl den Rolling Ball Tack Test als auch den SAFT-Test bestehen. Hierbei gilt der Rolling Ball Tack Test als bestanden, wenn die Rollstrecke der Kugel **kleiner als 3 cm** beträgt.

Der SAFT-Test gilt als bestanden, wenn die Versagenstemperatur **größer als 70 °C** ist. Eine Gesamtbewertung der Versiegelungsmassen VV1, VV2 sowie V1 bis V6 ist in der folgenden Tabelle 8 zusammengestellt.

Tabelle 8:

| Versiegelungsmasse | VV1 | VV2 | V1 | V2 | V3 | V4 | V5 | V6 |
|---|---|---|---|---|---|---|---|---|
| Bewertung Rolling Ball Tack Test | NB | B | B | B | B | B | B | B |
| Bewertung SAFT-Test | B | NB | B | B | B | B | B | B |
| Gesamtbewertung | NB | NB | B | B | B | B | B | B |
| B bedeutet "bestanden" und NB bedeutet "nicht bestanden". | | | | | | | | |

Die erfindungsgemäßen Versiegelungsmassen zeichnen sich dadurch aus, dass sie beide Tests bestehen.

Die nicht-erfindungsgemäßen Versiegelungsmassen bestehen zumindest einen der beiden Tests nicht.

Trägt man die erfindungsgemäße Versiegelungsmasse als 3 mm dicken Film auf die Reifenseele auf und befüllt man den Reifen mit Luft, sodass er einen Luftdruck von 2,5 bar hat, wirkt die Versiegelungsmasse selbstabdichtend, wenn man einen eingeschlagenen Nagel (bis 5 mm Durchmesser) herauszieht. Der Luftdruck im Reifen bleibt konstant für mindestens eine Woche.

**Patentansprüche**

1. **Versiegelungsgele** mit einer Mooney-Viskosität (ML1+4) @ 100 °C von 100 MU bis 170 MU,

   i) in Form einer Mischung enthaltend **Dienkautschukgel (A),** mit einer Mooney-Viskosität (ML1+4) @ 100 °C von 170 MU bis 195 MU, erhältlich durch Emulsionspolymerisation bei 5 °C bis 20 °C von mindestens einem konjugierten Dien in Gegenwart von mindestens einem Vernetzer (I) und **Dienkautschukgel (B),** mit einer Mooney-Viskosität (ML1+4) @ 100 °C von 75 MU bis 110 MU, erhältlich durch Emulsionspolymerisation bei 5 °C bis 20 °C von mindestens einem konjugierten Dien in Gegenwart von mindestens einem Vernetzer (II) oder ii) erhältlich durch Emulsionspolymerisation bei 5 °C bis 20 °C von mindestens einem konjugierten Dien in Gegenwart von mindestens einem Vernetzer (I) und in Gegenwart von mindestens einem Vernetzer (II), wobei

**Vernetzer (I)** Acrylate und Methacrylate von mehrwertigen, vorzugsweise 2- bis 4-wertigen, $C_2$-$C_{20}$-Alkoholen sind, **bevorzugt** ausgewählt aus der Gruppe bestehend aus Acrylaten und Methacrylaten von Ethylenglycol, 1,2-Propandiol, 1,4-Butandiol, Hexandiol, Polyethylenglycol mit 2 bis 8, vorzugsweise 2 bis 4 Oxyethyleneinheiten, Neopentylglycol, Bisphenol A, Glycerin, Trimethylolpropan, Pentaerythrit, Sorbit mit ungesättigten Polyestern aus aliphatischen Di- und Polyolen sowie Mischungen hiervon, **besonders bevorzugt** ausgewählt aus der Gruppe bestehend aus Acrylaten und Methacrylaten von 1,2-Propandiol, 1,4-Butandiol, Neopentylglycol, Bisphenol A, Glycerin, Trimethylolpropan und Pentaerythrit, und Vernetzer (I) **ganz besonders bevorzugt** Trimethylolpropantrimethacrylat (TMPTMA) ist, und

**Vernetzer (II)** Verbindungen mit zwei oder mehr Vinyl-, Allyl- oder Isopropenylgruppen oder einer Maleimid-Einheit sind, bevorzugt ausgewählt aus der Gruppe bestehend aus Diisopropenylbenzol, Divinylbenzol (DVB), Divinylether, Divinylsulfon, Diallylphthalat, Trivinylbenzol, Triallylcyanurat, Triallylisocyanurat, 1,2-Polybutadien, N,N'-m-Phenylenmaleimid, 2,4-Toluylenbis(maleimid) und Triallyltrimellitat sowie Mischungen hiervon, besonders bevorzugt ausgewählt aus der Gruppe Diisopropenylbenzol, Divinylbenzol und Trivinylbenzol, und Vernetzer (II) ganz besonders bevorzugt Divinylbenzol ist.

2. Versiegelungsgele gemäß Anspruch 1, **dadurch gekennzeichnet, dass** das mindestens eine konjugierte **Dien** 1,3-Butadien, 2,3-Dimethyl-1,3-butadien, Isopren oder Chloropren, bevorzugt 1,3-Butadien ist.

3. Versiegelungsgele gemäß einem der Ansprüche 1 bis 5, **dadurch gekennzeichnet, dass** als weitere Monomere 1,3-Butadien, **Vinylaromaten,** bevorzugt Styrol, 2-Methylstyrol, 3-Methylstyrol, 4-Methylstyrol, $\alpha$-Methylstyrol, 2,4-Dimethylstyrol, 2,4-Diisopropylstyrol, 4-tert-Butylstyrol oder tert-Butoxystyrol, besonders bevorzugt Styrol, Acrylnitril, Isopren, Ester der Acryl- und Methacrylsäure, Tetrafluorethylen, Vinylidenfluord, Hexafluorpropen, 2-Chlorbutadien, 2,3-Dichlorbutadien, doppelbindungshaltige Carbonsäuren, bevorzugt Acrylsäure, Methacrylsäure, Maleinsäure oder Itaconsäure, doppelbindungshaltige Hydroxyverbindungen, bevorzugt Hydroxyethylmethacrylat, Hydroxyethylacrylat oder Hydroxybutylmethacrylat, aminfunktionalisierte (Meth)acrylate, Glycidylmethacrylat, Acrolein, N-Vinyl-2-pyrollidon, N-Allyl-Harnstoff, N-Allyl-Thioharnstoff, sekundäre Amino-(meth)acrylsäureester bevorzugt 2-tert-Butylaminoethylmethacrylat und 2-tert-Butylaminoethylmethacrylamid oder vinylische Heteroaromaten, wie 2-, 4-Vinylpyridin und 1-Vinylimidazol eingesetzt werden.

4. Versiegelungsgele gemäß einem der Ansprüche 1 bis 3, **dadurch gekennzeichnet, dass** als mindestens ein konjugiertes Dien 1,3-Butadien eingesetzt wird und die Dienkautschukgele und die Versiegelungsgele einen **Anteil** an cis-1,4-Butadien-Einheiten von 8 Gew.-% bis 17 Gew.-%, einen Anteil an trans-1,4-Butadien-Einheiten von 59 Gew.-% bis 75 Gew.-% und einen Anteil an 1,2-Vinyl-Butadien-Einheiten von 17 Gew.-% bis 21 Gew.-% bezogen auf eingebautes 1,3-Butadien aufweisen.

5. Versiegelungsgele gemäß einem der Ansprüche 1 bis 4, **dadurch gekennzeichnet, dass** die Menge an Vernetzer (I) typischerweise 1 phm bis 6 phm, bevorzugt 1 phm bis 4 phm, und besonders bevorzugt 1,5 phm bis 3 phm bezogen auf die Gesamtmenge an Dienmonomer, weiterem Monomer und Vernetzer beträgt.

6. Versiegelungsgele gemäß einem der Ansprüche 1 bis 5, **dadurch gekennzeichnet, dass** die Menge an Vernetzer (II) typischerweise 0,2 phm bis 4 phm, bevorzugt 0,2 phm bis 3 phm und besonders bevorzugt 0,5 phm bis 2,7 phm bezogen auf die Gesamtmenge an Dienmonomer, weiterem Monomer und Vernetzer beträgt.

7. Versiegelungsgele gemäß einem der Ansprüche 1 bis 6, wobei die **Menge an weiterem Monomer** im Dienkautschukgel typischerweise 1 phm bis 20 phm, und bevorzugt 8 phm bis 14 phm, bezogen auf die Gesamtmenge an Monomeren und Vernetzer beträgt und die **Menge an Dienmonomer** im Dienkautschukgel typischerweise 79,8 phm bis 98,8 phm, bevorzugt 86 phm bis 91,8 phm bezogen auf die Gesamtmenge an Dienmonomer, weiterem Monomer und Vernetzer beträgt.

8. Versiegelungsgele gemäß einem der Ansprüche 1 bis 7, wobei das **Verhältnis der Dienkautschukgele (A) und (B)** (1:9) bis (9:1), bevorzugt (4:1) bis (1:4), besonders bevorzugt (2,5:1) bis (1:2,5) beträgt.

9. Versiegelungsgele gemäß einem der Ansprüche 1 bis 7, erhältlich durch Mischung der Dienkautschukgele (A) und/oder (B) mit Versieglungsgel (H).

10. **Versiegelungsmassen** enthaltend

mindestens ein **Versiegelungsgel** gemäß einem der Ansprüche 1 bis 9 in einer Menge von 45 phr bis 100 phr, bevorzugt 60 phr bis 100 phr und besonders bevorzugt 70 phr bis 100 phr,

**Harz (C)** in einer Menge von 10 phr bis 60 phr, bevorzugt 20 phr bis 50 phr und besonders bevorzugt 25 phr bis 45 phr und

gegebenenfalls einen **Naturkautschuk oder synthetischen Kautschuk (E),** bevorzugt Copolymere auf Basis konjugierter Diolefine aus einer Gruppe enthaltend 1,3-Butadien, Isopren, 2,3-Dimethyl-1,3-butadien, 1,3-Pentadien, 1,3-Hexadien, 3-Butyl-1,3-octadien, 2-Phenyl-1,3-butadien oder Mischungen davon, besonders bevorzugt aus einer Gruppe enthaltend natürliches cis-1,4-Polyisopren, synthetisches cis-1,4-Polyisopren, 3,4-Polyisopren, Polybutadien, 1,3-Butadien-Acrylonitril-Copolymer und Mischungen davon, in einer Menge von 0 phr bis 55 phr, bevorzugt 0 phr bis 40 phr und besonders bevorzugt 0 phr bis 30 phr,

jeweils bezogen auf die Gesamtmenge an Versiegelungsgel und gegebenenfalls Natur- und/oder Synthesekautschuk (E) in der Versiegelungsmasse.

11. **Versiegelungsmassen** gemäß Anspruch 10, enthaltend

**Alterungsschutzmittel** (D), bevorzugt in einer Menge von 1 phr bis 10 phr und besonders bevorzugt in einer Menge von 1 phr bis 5 phr.

12. **Versiegelungsmassen** gemäß Anspruch 10 oder 11, enthaltend

**Weichmacher (F)** in einer Menge von 0,5 phr bis 60 phr, bevorzugt 10 phr bis 50 phr und besonders bevorzugt 15 phr bis 40 phr zumindest eines Weichmachers (F).

13. **Versiegelungsmassen** gemäß einem der Ansprüche 10 bis 12, enthaltend

zumindest einen **Füllstoff (G)** in einer Menge von 1 phr bis 50 phr, bevorzugt 1 phr bis 30 phr und besonders bevorzugt 1 phr bis 20 phr.

14. **Verfahren zur Herstellung von Versiegelungsmassen** gemäß einem der Ansprüche 10 bis 13, durch Mischen der Komponenten in fester oder flüssiger Form.

15. **Verfahren zur Herstellung von Versiegelungsmassen** gemäß einem der Ansprüche 10 bis 13, durch Mischen der Kautschukkomponenten in Form ihrer Latices und gemeinsame Aufarbeitung sowie Mischen der weiteren Komponenten, bevorzugt in Form von Suspensionen.

16. **Verwendung von** Versiegelungsgelen gemäß einem der Ansprüche 1 bis 8 in Versiegelungsmassen, insbesondere zur Verbesserung der Adhäsions- und Kohäsionseigenschaften.

17. **Verwendung von Versiegelungsmassen** gemäß einem der Ansprüche 10 bis 12 als Versiegelungsschicht in Reifen, bevorzugt auf Innerlinern in Fahrzeugluftreifen, Hohlkörpern oder Membranen.

18. **Fahrzeugluftreifen** mit einer versiegelungsgelhaltigen Versiegelungsmasse enthaltend ein Versiegelungsgel gemäß Anspruch 1 bis 8.

Europäisches Patentamt
European Patent Office
Office européen des brevets

**EUROPÄISCHER RECHERCHENBERICHT**

Nummer der Anmeldung

EP 15 17 8531

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2010/152370 A1 (STEINHAUSER NORBERT [DE] ET AL) 17. Juni 2010 (2010-06-17) * das ganze Dokument * * Absatz [0012] - Absatz [0028] * ----- | 1-18 | INV. C08F212/36 B60C1/00 C08F216/12 C08F218/18 |
| A | US 2015/105515 A1 (BRANDAU SVEN [FR] ET AL) 16. April 2015 (2015-04-16) * das ganze Dokument * ----- | 1-18 | C08F222/10 C09J4/00 |
| A,D | US 3 565 151 A (COURTNEY JOHN A) 23. Februar 1971 (1971-02-23) * das ganze Dokument * ----- | 1-18 | |
| A,D | US 3 981 342 A (FARBER MILTON ET AL) 21. September 1976 (1976-09-21) * das ganze Dokument * ----- | 1-18 | |

RECHERCHIERTE SACHGEBIETE (IPC)

C08F
B60C
C09J

Der vorliegende Recherchenbericht wurde für alle Patentansprüche erstellt

| Recherchenort | Abschlußdatum der Recherche | Prüfer |
|---|---|---|
| Den Haag | 20. Oktober 2015 | Droghetti, Anna |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 15 17 8531

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-10-2015

| Im Recherchenbericht angeführtes Patentdokument | Datum der Veröffentlichung | Mitglied(er) der Patentfamilie | Datum der Veröffentlichung |
|---|---|---|---|
| US 2010152370 A1 | 17-06-2010 | AT 545521 T<br>BR PI0905810 A2<br>CA 2683225 A1<br>CN 101724186 A<br>DE 102008052116 A1<br>EP 2177374 A1<br>ES 2379750 T3<br>JP 5739094 B2<br>JP 2010095724 A<br>KR 20100044110 A<br>TW 201031709 A<br>US 2010152370 A1 | 15-03-2012<br>29-03-2011<br>20-04-2010<br>09-06-2010<br>22-04-2010<br>21-04-2010<br>03-05-2012<br>24-06-2015<br>30-04-2010<br>29-04-2010<br>01-09-2010<br>17-06-2010 |
| US 2015105515 A1 | 16-04-2015 | CA 2866490 A1<br>CN 104558418 A<br>EP 2860196 A1<br>EP 2860197 A1<br>JP 2015078367 A<br>KR 20150043211 A<br>US 2015105515 A1 | 14-04-2015<br>29-04-2015<br>15-04-2015<br>15-04-2015<br>23-04-2015<br>22-04-2015<br>16-04-2015 |
| US 3565151 A | 23-02-1971 | KEINE | |
| US 3981342 A | 21-09-1976 | US 3981342 A<br>US 4064922 A | 21-09-1976<br>27-12-1977 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3565151 A
- US 3981342 A
- US 4228839 A
- US 4664168 A
- US 7004217 B
- US 4113799 A
- DE 102009003333 A
- WO 2008019901 A
- US 5295525 A
- US 6508898 B
- WO 2009143895 A
- DE 4220563 A
- GB 1078400 A
- EP 405216 A
- EP 0854171 A
- DE 60118364 T2
- EP 1149866 A
- EP 1291369 A
- DE 10345043 A
- DE 102005014271 A
- JP 7316126 A
- JP 7316127 A
- JP 07316128 A
- GB 823823 A
- GB 823824 A
- US 2187146 A
- US 20040127617 A
- US 4913209 A

**In der Beschreibung aufgeführte Nicht-Patentliteratur**

- **F. RÖTHEMEYER ; F. SOMMER.** Kautschuk Technologie. Carl Hanser Verlag, 2006, 206
- **F. RÖTHEMEYER ; F. SOMMER.** Kautschuk Technologie. Carl Hanser Verlag, 2006, 218
- **JAMES E. MARK ; BURAK ERMAN.** Science and Technology of Rubber. Elsevier Academic Press, 2005, 50
- **D. SCHURING.** Scale Moders in Engineering. Pergamon Press, 1977
- **F. RÖTHEMEYER ; F. SOMMER.** Kautschuk Technologie. Carl Hanser Verlag, 2006, 95 f
- Ullmann's Encyclopedia of Industrial Chemistry. 2011, vol. 31, 345-355
- Polymerization Processes, 1. Fundamentals. **A. E. HAMIELEC ; H. TOBITA.** Ullmann's Encyclopedia of Industrial Chemistry. 2011, 88
- Polymerization Processes, 1. Fundamentals. **A. E. HAMIELEC ; H. TOBITA.** Ullmann's Encyclopedia of Industrial Chemistry. 2011, 85
- **LACKE ; DRUCKFARBEN.** Römpp Lexikon. Georg Thieme Verlag, 1998
- **H.G. ELIAS.** Macromolecules, Volume 2, Industrial Polymers and Syntheses. Wiley-VCH Verlag GmbH & Co. KGaA, 2007, vol. 1, 160 ff
- **I. FRANTA.** Elastomers and Rubber Compounding Materials. Elsevier, 1989
- Ullmann's Encyclopedia of Industrial Chemistry. VCH Verlagsgesellschaft, 1993, vol. A 23